# EUROPEAN PATENT APPLICATION

(11) **EP 4 546 661 A2**
(43) Date of publication of application: **30.04.2025**
(21) Application number: 25155641.1
(22) Date of filing: 28.06.2022
(51) Int. Cl.: H04B 7/06

(54) **BEAM SHAPE REPORTING FOR POSITIONING**

(30) Priority: 03.08.2021 GR 20210100532
(62) Divisional of application: 22747554.8
(71) Applicant: QUALCOMM Incorporated, San Diego, CA 92121-1714 (US)
(72) Inventor: ZORGUI, Marwen, San Diego, 92121-1714 (US); YERRAMALLI, Srinivas, San Diego, 92121-1714 (US); MANOLAKOS, Alexandros, San Diego, 92121-1714 (US)
(74) Representative: Reddie & Grose LLP

(57) **Abstract**

Disclosed are techniques for communication. In an aspect, gNB may report antenna configuration and table that maps antenna element(s) to phase shift and/or amplitude shift to a position estimation entity (PDE). The PDE may derive beam shape based on the reported information. In another aspect, gNB may report transformation information by which a first beam shape of a first beam is transformed into a second beam shape of a second beam. The PDF may derive the second beam shape of the second beam based in part upon the transformation information

## Description

### BACKGROUND OF THE DISCLOSURE

### 1. Field of the Disclosure

Aspects of the disclosure relate generally to wireless communications.

### 2. Description of the Related Art

Wireless communication systems have developed through various generations, including a first-generation analog wireless phone service (1G), a second-generation (2G) digital wireless phone service (including interim 2.5G and 2.75G networks), a third-generation (3G) high speed data, Internet-capable wireless service and a fourth-generation (4G) service (e.g., Long Term Evolution (LTE) or WiMax). There are presently many different types of wireless communication systems in use, including cellular and personal communications service (PCS) systems. Examples of known cellular systems include the cellular analog advanced mobile phone system (AMPS), and digital cellular systems based on code division multiple access (CDMA), frequency division multiple access (FDMA), time division multiple access (TDMA), the Global System for Mobile communications (GSM), etc.

A fifth generation (5G) wireless standard, referred to as New Radio (NR), calls for higher data transfer speeds, greater numbers of connections, and better coverage, among other improvements. The 5G standard, according to the Next Generation Mobile Networks Alliance, is designed to provide data rates of several tens of megabits per second to each of tens of thousands of users, with 1 gigabit per second to tens of workers on an office floor. Several hundreds of thousands of simultaneous connections should be supported in order to support large sensor deployments. Consequently, the spectral efficiency of 5G mobile communications should be significantly enhanced compared to the current 4G standard. Furthermore, signaling efficiencies should be enhanced and latency should be substantially reduced compared to current standards.

### SUMMARY

The following presents a simplified summary relating to one or more aspects disclosed herein. Thus, the following summary should not be considered an extensive overview relating to all contemplated aspects, nor should the following summary be considered to identify key or critical elements relating to all contemplated aspects or to delineate the scope associated with any particular aspect. Accordingly, the following summary has the sole purpose to present certain concepts relating to one or more aspects relating to the mechanisms disclosed herein in a simplified form to precede the detailed description presented below.

In an aspect, a method of operating a base station includes determining an antenna configuration associated with the base station; determining a table that maps each antenna element of a set of antenna elements associated with the antenna configuration to a phase shift, or an amplitude shift, or a combination thereof; reporting an indication of the table to a position estimation entity; and reporting an indication of the antenna configuration to the position estimation entity.

In some aspects, the table maps the set of antenna elements per antenna element, or the table maps the set of antenna elements per group of antenna elements that are associated with a same phase shift, or a same amplitude shift, or a combination thereof.

In some aspects, the antenna configuration includes a number of antenna elements among the set of antenna elements, an antenna spacing associated with the set of antenna elements, or a combination thereof.

In some aspects, the number of antenna elements comprises a number of vertical antenna elements, a number of horizontal antenna elements, or a combination thereof.

In some aspects, the antenna spacing comprises vertical antenna spacing, horizontal antenna spacing, or a combination thereof.

In some aspects, the table maps each antenna element of the set of antenna elements to at least the phase shift.

In some aspects, the table maps at least one antenna element of the set of antenna elements to both the phase shift and the amplitude shift.

In some aspects, the indication of the table further specifies, for at least one antenna element, an association with one or more positioning reference signal (PRS) resources.

In some aspects, the indication of the table and the indication of the antenna configuration are reported via a single measurement report, or the indication of the table and the indication of the antenna configuration are reported via multiple measurement reports.

In some aspects, the indication of the table is reported via location assistance data, or the indication of the table is reported on-demand.

In an aspect, a method of operating a position estimation entity includes receiving, from a base station, an indication of an antenna configuration associated with the base station; receiving, from the base station, an indication of a table that maps each antenna element of a set of antenna elements associated with the antenna configuration to a phase shift, or an amplitude shift, or a combination thereof; and determining beam shape information one or more antenna elements based on the indication of the antenna configuration and the indication of the table.

In some aspects, the indication of the table is received via location assistance data, or the indication of the table is received on-demand.

In some aspects, the table maps the set of antenna elements per antenna element, or the table maps the set of antenna elements per group of antenna elements that are associated with a same phase shift, or a same amplitude shift, or a combination thereof.

In some aspects, the antenna configuration includes a number of antenna elements among the set of antenna elements, an antenna spacing associated with the set of antenna elements, or a combination thereof.

In some aspects, the number of antenna elements comprises a number of vertical antenna elements, a number of horizontal antenna elements, or a combination thereof.

In some aspects, the antenna spacing comprises vertical antenna spacing, horizontal antenna spacing, or a combination thereof.

In some aspects, the table maps each antenna element of the set of antenna elements to at least the phase shift.

In some aspects, the table maps at least one antenna element of the set of antenna elements to both the phase shift and the amplitude shift.

In some aspects, the indication of the table further specifies, for at least one antenna element, an association with one or more positioning reference signal (PRS) resources.

In some aspects, the indication of the table and the indication of the antenna configuration are reported via a single measurement report, or the indication of the table and the indication of the antenna configuration are reported via multiple measurement reports.

In an aspect, a method of operating a base station includes determining a first beam shape of a first beam; determining a second beam shape of a second beam; determining transformation information by which the first beam shape of the first beam is transformed into the second beam shape of the second beam; and reporting the transformation information to a position estimation entity.

In some aspects, the transformation information comprises rotation information, translation information, or a combination thereof.

In some aspects, the first beam and the second beam are associated with the base station.

In some aspects, the first beam is associated with the base station and the second beam is associated with another base station.

In some aspects, the second beam is associated with the base station and the first beam is associated with another base station.

In some aspects, the first beam is a reference beam associated with a known beam shape.

In some aspects, the transformation information comprises an Azimuth degree offset, an elevation degree offset, or a combination thereof.

In some aspects, the method includes receiving, from the position estimation entity, a template for beam shapes, wherein the transformation information is based in part upon the template.

In some aspects, the transformation information is reported via location assistance data, or the transformation information is reported on-demand.

In an aspect, a method of operating a position estimation entity includes receiving, from a base station, transformation information by which a first beam shape of a first beam is transformed into a second beam shape of a second beam; and determining the second beam shape of the second beam based in part upon the transformation information.

In some aspects, the transformation information is received via location assistance data, or the transformation information is received on-demand.

In some aspects, the transformation information comprises rotation information, translation information, or a combination thereof.

In some aspects, the first beam and the second beam are associated with the base station.

In some aspects, the first beam is associated with the base station and the second beam is associated with another base station.

In some aspects, the second beam is associated with the base station and the first beam is associated with another base station.

In some aspects, the first beam is a reference beam associated with a known beam shape.

In some aspects, the transformation information comprises an Azimuth degree offset, an elevation degree offset, or a combination thereof.

In some aspects, the method includes transmitting, to the base station, a template for beam shapes, wherein the transformation information is based in part upon the template.

In an aspect, a base station includes a memory; at least one transceiver; and at least one processor communicatively coupled to the memory and the at least one transceiver, the at least one processor configured to: determine an antenna configuration associated with the base station; determine a table that maps each antenna element of a set of antenna elements associated with the antenna configuration to a phase shift, or an amplitude shift, or a combination thereof; report an indication of the table to a position estimation entity; and report an indication of the antenna configuration to the position estimation entity.

In some aspects, the table maps the set of antenna elements per antenna element, or the table maps the set of antenna elements per group of antenna elements that are associated with a same phase shift, or a same amplitude shift, or a combination thereof.

In some aspects, the antenna configuration includes a number of antenna elements among the set of antenna elements, an antenna spacing associated with the set of antenna elements, or a combination thereof.

In some aspects, the number of antenna elements comprises a number of vertical antenna elements, a number of horizontal antenna elements, or a combination thereof.

In some aspects, the antenna spacing comprises vertical antenna spacing, horizontal antenna spacing, or a combination thereof.

In some aspects, the table maps each antenna element of the set of antenna elements to at least the phase shift.

In some aspects, the table maps at least one antenna element of the set of antenna elements to both the phase shift and the amplitude shift.

In some aspects, the indication of the table further specifies, for at least one antenna element, an association with one or more positioning reference signal (PRS) resources.

In some aspects, the indication of the table and the indication of the antenna configuration are reported via a single measurement report, or the indication of the table and the indication of the antenna configuration are reported via multiple measurement reports.

In some aspects, the indication of the table is reported via location assistance data, or the indication of the table is reported on-demand.

In an aspect, a position estimation entity includes a memory; at least one transceiver; and at least one processor communicatively coupled to the memory and the at least one transceiver, the at least one processor configured to: receive, via the at least one transceiver, from a base station, an indication of an antenna configuration associated with the base station; receive, via the at least one transceiver, from the base station, an indication of a table that maps each antenna element of a set of antenna elements associated with the antenna configuration to a phase shift, or an amplitude shift, or a combination thereof; and determine beam shape information one or more antenna elements based on the indication of the antenna configuration and the indication of the table.

In some aspects, the indication of the table is received via location assistance data, or the indication of the table is received on-demand.

In some aspects, the table maps the set of antenna elements per antenna element, or the table maps the set of antenna elements per group of antenna elements that are associated with a same phase shift, or a same amplitude shift, or a combination thereof.

In some aspects, the antenna configuration includes a number of antenna elements among the set of antenna elements, an antenna spacing associated with the set of antenna elements, or a combination thereof.

In some aspects, the number of antenna elements comprises a number of vertical antenna elements, a number of horizontal antenna elements, or a combination thereof.

In some aspects, the antenna spacing comprises vertical antenna spacing, horizontal antenna spacing, or a combination thereof.

In some aspects, the table maps each antenna element of the set of antenna elements to at least the phase shift.

In some aspects, the table maps at least one antenna element of the set of antenna elements to both the phase shift and the amplitude shift.

In some aspects, the indication of the table further specifies, for at least one antenna element, an association with one or more positioning reference signal (PRS) resources.

In some aspects, the indication of the table and the indication of the antenna configuration are reported via a single measurement report, or the indication of the table and the indication of the antenna configuration are reported via multiple measurement reports.

In an aspect, a base station includes a memory; at least one transceiver; and at least one processor communicatively coupled to the memory and the at least one transceiver, the at least one processor configured to: determine a first beam shape of a first beam; determine a second beam shape of a second beam; determine transformation information by which the first beam shape of the first beam is transformed into the second beam shape of the second beam; and report the transformation information to a position estimation entity.

In some aspects, the transformation information comprises rotation information, translation information, or a combination thereof.

In some aspects, the first beam and the second beam are associated with the base station.

In some aspects, the first beam is associated with the base station and the second beam is associated with another base station.

In some aspects, the second beam is associated with the base station and the first beam is associated with another base station.

In some aspects, the first beam is a reference beam associated with a known beam shape.

In some aspects, the transformation information comprises an Azimuth degree offset, an elevation degree offset, or a combination thereof.

In some aspects, the at least one processor is further configured to: receive, via the at least one transceiver, from the position estimation entity, a template for beam shapes, wherein the transformation information is based in part upon the template.

In some aspects, the transformation information is reported via location assistance data, or the transformation information is reported on-demand.

In an aspect, a position estimation entity includes a memory; at least one transceiver; and at least one processor communicatively coupled to the memory and the at least one transceiver, the at least one processor configured to: receive, via the at least one transceiver, from a base station, transformation information by which a first beam shape of a first beam is transformed into a second beam shape of a second beam; and determine the second beam shape of the second beam based in part upon the transformation information.

In some aspects, the transformation information is received via location assistance data, or the transformation information is received on-demand.

In some aspects, the transformation information comprises rotation information, translation information, or a combination thereof.

In some aspects, the first beam and the second beam are associated with the base station.

In some aspects, the first beam is associated with the base station and the second beam is associated with another base station.

In some aspects, the second beam is associated with the base station and the first beam is associated with another base station.

In some aspects, the first beam is a reference beam associated with a known beam shape.

In some aspects, the transformation information comprises an Azimuth degree offset, an elevation degree offset, or a combination thereof.

In some aspects, the at least one processor is further configured to: transmit, via the at least one transceiver, to the base station, a template for beam shapes, wherein the transformation information is based in part upon the template.

In an aspect, a base station includes means for determining an antenna configuration associated with the base station; means for determining a table that maps each antenna element of a set of antenna elements associated with the antenna configuration to a phase shift, or an amplitude shift, or a combination thereof; means for reporting an indication of the table to a position estimation entity; and means for reporting an indication of the antenna configuration to the position estimation entity.

In some aspects, the table maps the set of antenna elements per antenna element, or the table maps the set of antenna elements per group of antenna elements that are associated with a same phase shift, or a same amplitude shift, or a combination thereof.

In some aspects, the antenna configuration includes a number of antenna elements among the set of antenna elements, an antenna spacing associated with the set of antenna elements, or a combination thereof.

In some aspects, the number of antenna elements comprises a number of vertical antenna elements, a number of horizontal antenna elements, or a combination thereof.

In some aspects, the antenna spacing comprises vertical antenna spacing, horizontal antenna spacing, or a combination thereof.

In some aspects, the table maps each antenna element of the set of antenna elements to at least the phase shift.

In some aspects, the table maps at least one antenna element of the set of antenna elements to both the phase shift and the amplitude shift.

In some aspects, the indication of the table further specifies, for at least one antenna element, an association with one or more positioning reference signal (PRS) resources.

In some aspects, the indication of the table and the indication of the antenna configuration are reported via a single measurement report, or the indication of the table and the indication of the antenna configuration are reported via multiple measurement reports.

In some aspects, the indication of the table is reported via location assistance data, or the indication of the table is reported on-demand.

In an aspect, a position estimation entity includes means for receiving, from a base station, an indication of an antenna configuration associated with the base station; means for receiving, from the base station, an indication of a table that maps each antenna element of a set of antenna elements associated with the antenna configuration to a phase shift, or an amplitude shift, or a combination thereof; and means for determining beam shape information one or more antenna elements based on the indication of the antenna configuration and the indication of the table.

In some aspects, the indication of the table is received via location assistance data, or the indication of the table is received on-demand.

In some aspects, the table maps the set of antenna elements per antenna element, or the table maps the set of antenna elements per group of antenna elements that are associated with a same phase shift, or a same amplitude shift, or a combination thereof.

In some aspects, the antenna configuration includes a number of antenna elements among the set of antenna elements, an antenna spacing associated with the set of antenna elements, or a combination thereof.

In some aspects, the number of antenna elements comprises a number of vertical antenna elements, a number of horizontal antenna elements, or a combination thereof.

In some aspects, the antenna spacing comprises vertical antenna spacing, horizontal antenna spacing, or a combination thereof.

In some aspects, the table maps each antenna element of the set of antenna elements to at least the phase shift.

In some aspects, the table maps at least one antenna element of the set of antenna elements to both the phase shift and the amplitude shift.

In some aspects, the indication of the table further specifies, for at least one antenna element, an association with one or more positioning reference signal (PRS) resources.

In some aspects, the indication of the table and the indication of the antenna configuration are reported via a single measurement report, or the indication of the table and the indication of the antenna configuration are reported via multiple measurement reports.

In an aspect, a base station includes means for determining a first beam shape of a first beam; means for determining a second beam shape of a second beam; means for determining transformation information by which the first beam shape of the first beam is transformed into the second beam shape of the second beam; and means for reporting the transformation information to a position estimation entity.

In some aspects, the transformation information comprises rotation information, translation information, or a combination thereof.

In some aspects, the first beam and the second beam are associated with the base station.

In some aspects, the first beam is associated with the base station and the second beam is associated with another base station.

In some aspects, the second beam is associated with the base station and the first beam is associated with another base station.

In some aspects, the first beam is a reference beam associated with a known beam shape.

In some aspects, the transformation information comprises an Azimuth degree offset, an elevation degree offset, or a combination thereof.

In some aspects, the method includes means for receiving, from the position estimation entity, a template for beam shapes, wherein the transformation information is based in part upon the template.

In some aspects, the transformation information is reported via location assistance data, or the transformation information is reported on-demand.

In an aspect, a position estimation entity includes means for receiving, from a base station, transformation information by which a first beam shape of a first beam is transformed into a second beam shape of a second beam; and means for determining the second beam shape of the second beam based in part upon the transformation information.

In some aspects, the transformation information is received via location assistance data, or the transformation information is received on-demand.

In some aspects, the transformation information comprises rotation information, translation information, or a combination thereof.

In some aspects, the first beam and the second beam are associated with the base station.

In some aspects, the first beam is associated with the base station and the second beam is associated with another base station.

In some aspects, the second beam is associated with the base station and the first beam is associated with another base station.

In some aspects, the first beam is a reference beam associated with a known beam shape.

In some aspects, the transformation information comprises an Azimuth degree offset, an elevation degree offset, or a combination thereof.

In some aspects, the method includes means for transmitting, to the base station, a template for beam shapes, wherein the transformation information is based in part upon the template.

In an aspect, a non-transitory computer-readable medium storing computer-executable instructions that, when executed by a base station, cause the base station to: determine an antenna configuration associated with the base station; determine a table that maps each antenna element of a set of antenna elements associated with the antenna configuration to a phase shift, or an amplitude shift, or a combination thereof; report an indication of the table to a position estimation entity; and report an indication of the antenna configuration to the position estimation entity.

In some aspects, the table maps the set of antenna elements per antenna element, or the table maps the set of antenna elements per group of antenna elements that are associated with a same phase shift, or a same amplitude shift, or a combination thereof.

In some aspects, the antenna configuration includes a number of antenna elements among the set of antenna elements, an antenna spacing associated with the set of antenna elements, or a combination thereof.

In some aspects, the number of antenna elements comprises a number of vertical antenna elements, a number of horizontal antenna elements, or a combination thereof.

In some aspects, the antenna spacing comprises vertical antenna spacing, horizontal antenna spacing, or a combination thereof.

In some aspects, the table maps each antenna element of the set of antenna elements to at least the phase shift.

In some aspects, the table maps at least one antenna element of the set of antenna elements to both the phase shift and the amplitude shift.

In some aspects, the indication of the table further specifies, for at least one antenna element, an association with one or more positioning reference signal (PRS) resources.

In some aspects, the indication of the table and the indication of the antenna configuration are reported via a single measurement report, or the indication of the table and the indication of the antenna configuration are reported via multiple measurement reports.

In some aspects, the indication of the table is reported via location assistance data, or the indication of the table is reported on-demand.

In an aspect, a non-transitory computer-readable medium storing computer-executable instructions that, when executed by a position estimation entity, cause the position estimation entity to: receive, from a base station, an indication of an antenna configuration associated with the base station; receive, from the base station, an indication of a table that maps each antenna element of a set of antenna elements associated with the antenna configuration to a phase shift, or an amplitude shift, or a combination thereof; and determine beam shape information one or more antenna elements based on the indication of the antenna configuration and the indication of the table.

In some aspects, the indication of the table is received via location assistance data, or the indication of the table is received on-demand.

In some aspects, the table maps the set of antenna elements per antenna element, or the table maps the set of antenna elements per group of antenna elements that are associated with a same phase shift, or a same amplitude shift, or a combination thereof.

In some aspects, the antenna configuration includes a number of antenna elements among the set of antenna elements, an antenna spacing associated with the set of antenna elements, or a combination thereof.

In some aspects, the number of antenna elements comprises a number of vertical antenna elements, a number of horizontal antenna elements, or a combination thereof.

In some aspects, the antenna spacing comprises vertical antenna spacing, horizontal antenna spacing, or a combination thereof.

In some aspects, the table maps each antenna element of the set of antenna elements to at least the phase shift.

In some aspects, the table maps at least one antenna element of the set of antenna elements to both the phase shift and the amplitude shift.

In some aspects, the indication of the table further specifies, for at least one antenna element, an association with one or more positioning reference signal (PRS) resources.

In some aspects, the indication of the table and the indication of the antenna configuration are reported via a single measurement report, or the indication of the table and the indication of the antenna configuration are reported via multiple measurement reports.

In an aspect, a non-transitory computer-readable medium storing computer-executable instructions that, when executed by a base station, cause the base station to: determine a first beam shape of a first beam; determine a second beam shape of a second beam; determine transformation information by which the first beam shape of the first beam is transformed into the second beam shape of the second beam; and report the transformation information to a position estimation entity.

In some aspects, the transformation information comprises rotation information, translation information, or a combination thereof.

In some aspects, the first beam and the second beam are associated with the base station.

In some aspects, the first beam is associated with the base station and the second beam is associated with another base station.

In some aspects, the second beam is associated with the base station and the first beam is associated with another base station.

In some aspects, the first beam is a reference beam associated with a known beam shape.

In some aspects, the transformation information comprises an Azimuth degree offset, an elevation degree offset, or a combination thereof.

In some aspects, instructions that, when executed by base station, further cause the base station to:
In some aspects, the transformation information is reported via location assistance data, or the transformation information is reported on-demand.

In an aspect, a non-transitory computer-readable medium storing computer-executable instructions that, when executed by a position estimation entity, cause the position estimation entity to: receive, from a base station, transformation information by which a first beam shape of a first beam is transformed into a second beam shape of a second beam; and determine the second beam shape of the second beam based in part upon the transformation information.

In some aspects, the transformation information is received via location assistance data, or the transformation information is received on-demand.

In some aspects, the transformation information comprises rotation information, translation information, or a combination thereof.

In some aspects, the first beam and the second beam are associated with the base station.

In some aspects, the first beam is associated with the base station and the second beam is associated with another base station.

In some aspects, the second beam is associated with the base station and the first beam is associated with another base station.

In some aspects, the first beam is a reference beam associated with a known beam shape.

In some aspects, the transformation information comprises an Azimuth degree offset, an elevation degree offset, or a combination thereof.

In some aspects, instructions that, when executed by position estimation entity, further cause the position estimation entity to:
Other objects and advantages associated with the aspects disclosed herein will be apparent to those skilled in the art based on the accompanying drawings and detailed description.

### BRIEF DESCRIPTION OF THE DRAWINGS

The accompanying drawings are presented to aid in the description of various aspects of the disclosure and are provided solely for illustration of the aspects and not limitation thereof.
FIG. 1 illustrates an example wireless communications system, according to aspects of the disclosure.
FIGS. 2A and 2B illustrate example wireless network structures, according to aspects of the disclosure.
FIGS. 3A, 3B, and 3C are simplified block diagrams of several sample aspects of components that may be employed in a user equipment (UE), a base station, and a network entity, respectively, and configured to support communications as taught herein.
FIG. 4 is a diagram illustrating an example frame structure, according to aspects of the disclosure.
FIG. 5 is a diagram illustrating various downlink channels within an example downlink slot, according to aspects of the disclosure.
FIG. 6 is a diagram illustrating an example downlink positioning reference signal (DL-PRS) configuration for two transmission-reception points (TRPs) operating in a same positioning frequency layer, according to aspects of the disclosure.
FIG. 7 illustrates examples of various positioning methods supported in New Radio (NR), according to aspects of the disclosure.
FIG. 8 is a diagram illustrating an example base station in communication with an example UE, according to aspects of the disclosure.
FIG. 9 illustrates an exemplary process of communication, according to aspects of the disclosure.
FIG. 10 illustrates an exemplary process of communication, according to aspects of the disclosure.
FIG. 11 illustrates an exemplary process of communication, according to aspects of the disclosure.
FIG. 12 illustrates an exemplary process of communication, according to aspects of the disclosure.

### DETAILED DESCRIPTION

Aspects of the disclosure are provided in the following description and related drawings directed to various examples provided for illustration purposes. Alternate aspects may be devised without departing from the scope of the disclosure. Additionally, well-known elements of the disclosure will not be described in detail or will be omitted so as not to obscure the relevant details of the disclosure.

The words "exemplary" and/or "example" are used herein to mean "serving as an example, instance, or illustration." Any aspect described herein as "exemplary" and/or "example" is not necessarily to be construed as preferred or advantageous over other aspects. Likewise, the term "aspects of the disclosure" does not require that all aspects of the disclosure include the discussed feature, advantage or mode of operation.

Those of skill in the art will appreciate that the information and signals described below may be represented using any of a variety of different technologies and techniques. For example, data, instructions, commands, information, signals, bits, symbols, and chips that may be referenced throughout the description below may be represented by voltages, currents, electromagnetic waves, magnetic fields or particles, optical fields or particles, or any combination thereof, depending in part on the particular application, in part on the desired design, in part on the corresponding technology, etc.

Further, many aspects are described in terms of sequences of actions to be performed by, for example, elements of a computing device. It will be recognized that various actions described herein can be performed by specific circuits (e.g., application specific integrated circuits (ASICs)), by program instructions being executed by one or more processors, or by a combination of both. Additionally, the sequence(s) of actions described herein can be considered to be embodied entirely within any form of non-transitory computer-readable storage medium having stored therein a corresponding set of computer instructions that, upon execution, would cause or instruct an associated processor of a device to perform the functionality described herein. Thus, the various aspects of the disclosure may be embodied in a number of different forms, all of which have been contemplated to be within the scope of the claimed subject matter. In addition, for each of the aspects described herein, the corresponding form of any such aspects may be described herein as, for example, "logic configured to" perform the described action.

As used herein, the terms "user equipment" (UE) and "base station" are not intended to be specific or otherwise limited to any particular radio access technology (RAT), unless otherwise noted. In general, a UE may be any wireless communication device (e.g., a mobile phone, router, tablet computer, laptop computer, consumer asset locating device, wearable (e.g., smartwatch, glasses, augmented reality (AR) / virtual reality (VR) headset, etc.), vehicle (e.g., automobile, motorcycle, bicycle, etc.), Internet of Things (IoT) device, etc.) used by a user to communicate over a wireless communications network. A UE may be mobile or may (e.g., at certain times) be stationary, and may communicate with a radio access network (RAN). As used herein, the term "UE" may be referred to interchangeably as an "access terminal" or "AT," a "client device," a "wireless device," a "subscriber device," a "subscriber terminal," a "subscriber station," a "user terminal" or "UT," a "mobile device," a "mobile terminal," a "mobile station," or variations thereof. Generally, UEs can communicate with a core network via a RAN, and through the core network the UEs can be connected with external networks such as the Internet and with other UEs. Of course, other mechanisms of connecting to the core network and/or the Internet are also possible for the UEs, such as over wired access networks, wireless local area network (WLAN) networks (e.g., based on the Institute of Electrical and Electronics Engineers (IEEE) 802.11 specification, etc.) and so on.

A base station may operate according to one of several RATs in communication with UEs depending on the network in which it is deployed, and may be alternatively referred to as an access point (AP), a network node, a NodeB, an evolved NodeB (eNB), a next generation eNB (ng-eNB), a New Radio (NR) Node B (also referred to as a gNB or gNodeB), etc. A base station may be used primarily to support wireless access by UEs, including supporting data, voice, and/or signaling connections for the supported UEs. In some systems a base station may provide purely edge node signaling functions while in other systems it may provide additional control and/or network management functions. A communication link through which UEs can send signals to a base station is called an uplink (UL) channel (e.g., a reverse traffic channel, a reverse control channel, an access channel, etc.). A communication link through which the base station can send signals to UEs is called a downlink (DL) or forward link channel (e.g., a paging channel, a control channel, a broadcast channel, a forward traffic channel, etc.). As used herein the term traffic channel (TCH) can refer to either an uplink / reverse or downlink / forward traffic channel.

The term "base station" may refer to a single physical transmission-reception point (TRP) or to multiple physical TRPs that may or may not be co-located. For example, where the term "base station" refers to a single physical TRP, the physical TRP may be an antenna of the base station corresponding to a cell (or several cell sectors) of the base station. Where the term "base station" refers to multiple co-located physical TRPs, the physical TRPs may be an array of antennas (e.g., as in a multiple-input multiple-output (MIMO) system or where the base station employs beamforming) of the base station. Where the term "base station" refers to multiple non-co-located physical TRPs, the physical TRPs may be a distributed antenna system (DAS) (a network of spatially separated antennas connected to a common source via a transport medium) or a remote radio head (RRH) (a remote base station connected to a serving base station). Alternatively, the non-co-located physical TRPs may be the serving base station receiving the measurement report from the UE and a neighbor base station whose reference radio frequency (RF) signals the UE is measuring. Because a TRP is the point from which a base station transmits and receives wireless signals, as used herein, references to transmission from or reception at a base station are to be understood as referring to a particular TRP of the base station.

In some implementations that support positioning of UEs, a base station may not support wireless access by UEs (e.g., may not support data, voice, and/or signaling connections for UEs), but may instead transmit reference signals to UEs to be measured by the UEs, and/or may receive and measure signals transmitted by the UEs. Such a base station may be referred to as a positioning beacon (e.g., when transmitting signals to UEs) and/or as a location measurement unit (e.g., when receiving and measuring signals from UEs).

An "RF signal" comprises an electromagnetic wave of a given frequency that transports information through the space between a transmitter and a receiver. As used herein, a transmitter may transmit a single "RF signal" or multiple "RF signals" to a receiver. However, the receiver may receive multiple "RF signals" corresponding to each transmitted RF signal due to the propagation characteristics of RF signals through multipath channels. A same transmitted RF signal on different paths between the transmitter and receiver may be referred to as a "multipath" RF signal. As used herein, an RF signal may also be referred to as a "wireless signal" or simply a "signal" where it is clear from the context that the term "signal" refers to a wireless signal or an RF signal.

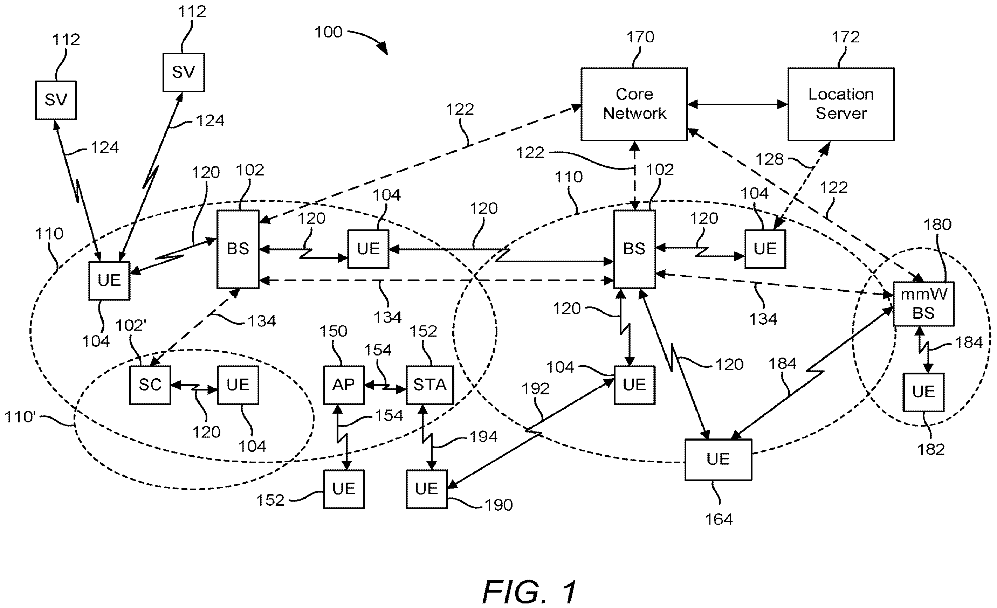

FIG. 1 illustrates an example wireless communications system 100, according to aspects of the disclosure. The wireless communications system 100 (which may also be referred to as a wireless wide area network (WWAN)) may include various base stations 102 (labeled "BS") and various UEs 104. The base stations 102 may include macro cell base stations (high power cellular base stations) and/or small cell base stations (low power cellular base stations). In an aspect, the macro cell base stations may include eNBs and/or ng-eNBs where the wireless communications system 100 corresponds to an LTE network, or gNBs where the wireless communications system 100 corresponds to a NR network, or a combination of both, and the small cell base stations may include femtocells, picocells, microcells, etc.

The base stations 102 may collectively form a RAN and interface with a core network 170 (e.g., an evolved packet core (EPC) or a 5G core (5GC)) through backhaul links 122, and through the core network 170 to one or more location servers 172 (e.g., a location management function (LMF) or a secure user plane location (SUPL) location platform (SLP)). The location server(s) 172 may be part of core network 170 or may be external to core network 170. A location server 172 may be integrated with a base station 102. A UE 104 may communicate with a location server 172 directly or indirectly. For example, a UE 104 may communicate with a location server 172 via the base station 102 that is currently serving that UE 104. A UE 104 may also communicate with a location server 172 through another path, such as via an application server (not shown), via another network, such as via a wireless local area network (WLAN) access point (AP) (e.g., AP 150 described below), and so on. For signaling purposes, communication between a UE 104 and a location server 172 may be represented as an indirect connection (e.g., through the core network 170, etc.) or a direct connection (e.g., as shown via direct connection 128), with the intervening nodes (if any) omitted from a signaling diagram for clarity.

In addition to other functions, the base stations 102 may perform functions that relate to one or more of transferring user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, RAN sharing, multimedia broadcast multicast service (MBMS), subscriber and equipment trace, RAN information management (RIM), paging, positioning, and delivery of warning messages. The base stations 102 may communicate with each other directly or indirectly (e.g., through the EPC / 5GC) over backhaul links 134, which may be wired or wireless.

The base stations 102 may wirelessly communicate with the UEs 104. Each of the base stations 102 may provide communication coverage for a respective geographic coverage area 110. In an aspect, one or more cells may be supported by a base station 102 in each geographic coverage area 110. A "cell" is a logical communication entity used for communication with a base station (e.g., over some frequency resource, referred to as a carrier frequency, component carrier, carrier, band, or the like), and may be associated with an identifier (e.g., a physical cell identifier (PCI), an enhanced cell identifier (ECI), a virtual cell identifier (VCI), a cell global identifier (CGI), etc.) for distinguishing cells operating via a same or a different carrier frequency. In some cases, different cells may be configured according to different protocol types (e.g., machine-type communication (MTC), narrowband IoT (NB-IoT), enhanced mobile broadband (eMBB), or others) that may provide access for different types of UEs. Because a cell is supported by a specific base station, the term "cell" may refer to either or both of the logical communication entity and the base station that supports it, depending on the context. In addition, because a TRP is typically the physical transmission point of a cell, the terms "cell" and "TRP" may be used interchangeably. In some cases, the term "cell" may also refer to a geographic coverage area of a base station (e.g., a sector), insofar as a carrier frequency can be detected and used for communication within some portion of geographic coverage areas 110.

While neighboring macro cell base station 102 geographic coverage areas 110 may partially overlap (e.g., in a handover region), some of the geographic coverage areas 110 may be substantially overlapped by a larger geographic coverage area 110. For example, a small cell base station 102' (labeled "SC" for "small cell") may have a geographic coverage area 110' that substantially overlaps with the geographic coverage area 110 of one or more macro cell base stations 102. A network that includes both small cell and macro cell base stations may be known as a heterogeneous network. A heterogeneous network may also include home eNBs (HeNBs), which may provide service to a restricted group known as a closed subscriber group (CSG).

The communication links 120 between the base stations 102 and the UEs 104 may include uplink (also referred to as reverse link) transmissions from a UE 104 to a base station 102 and/or downlink (DL) (also referred to as forward link) transmissions from a base station 102 to a UE 104. The communication links 120 may use MIMO antenna technology, including spatial multiplexing, beamforming, and/or transmit diversity. The communication links 120 may be through one or more carrier frequencies. Allocation of carriers may be asymmetric with respect to downlink and uplink (e.g., more or less carriers may be allocated for downlink than for uplink).

The wireless communications system 100 may further include a wireless local area network (WLAN) access point (AP) 150 in communication with WLAN stations (STAs) 152 via communication links 154 in an unlicensed frequency spectrum (e.g., 5 GHz). When communicating in an unlicensed frequency spectrum, the WLAN STAs 152 and/or the WLAN AP 150 may perform a clear channel assessment (CCA) or listen before talk (LBT) procedure prior to communicating in order to determine whether the channel is available.

The small cell base station 102' may operate in a licensed and/or an unlicensed frequency spectrum. When operating in an unlicensed frequency spectrum, the small cell base station 102' may employ LTE or NR technology and use a same 5 GHz unlicensed frequency spectrum as used by the WLAN AP 150. The small cell base station 102', employing LTE / 5G in an unlicensed frequency spectrum, may boost coverage to and/or increase capacity of the access network. NR in unlicensed spectrum may be referred to as NR-U. LTE in an unlicensed spectrum may be referred to as LTE-U, licensed assisted access (LAA), or MulteFire.

The wireless communications system 100 may further include a millimeter wave (mmW) base station 180 that may operate in mmW frequencies and/or near mmW frequencies in communication with a UE 182. Extremely high frequency (EHF) is part of the RF in the electromagnetic spectrum. EHF has a range of 30 GHz to 300 GHz and a wavelength between 1 millimeter and 10 millimeters. Radio waves in this band may be referred to as a millimeter wave. Near mmW may extend down to a frequency of 3 GHz with a wavelength of 100 millimeters. The super high frequency (SHF) band extends between 3 GHz and 30 GHz, also referred to as centimeter wave. Communications using the mmW/near mmW radio frequency band have high path loss and a relatively short range. The mmW base station 180 and the UE 182 may utilize beamforming (transmit and/or receive) over a mmW communication link 184 to compensate for the extremely high path loss and short range. Further, it will be appreciated that in alternative configurations, one or more base stations 102 may also transmit using mmW or near mmW and beamforming. Accordingly, it will be appreciated that the foregoing illustrations are merely examples and should not be construed to limit the various aspects disclosed herein.

Transmit beamforming is a technique for focusing an RF signal in a specific direction. Traditionally, when a network node (e.g., a base station) broadcasts an RF signal, it broadcasts the signal in all directions (omni-directionally). With transmit beamforming, the network node determines where a given target device (e.g., a UE) is located (relative to the transmitting network node) and projects a stronger downlink RF signal in that specific direction, thereby providing a faster (in terms of data rate) and stronger RF signal for the receiving device(s). To change the directionality of the RF signal when transmitting, a network node can control the phase and relative amplitude of the RF signal at each of the one or more transmitters that are broadcasting the RF signal. For example, a network node may use an array of antennas (referred to as a "phased array" or an "antenna array") that creates a beam of RF waves that can be "steered" to point in different directions, without actually moving the antennas. Specifically, the RF current from the transmitter is fed to the individual antennas with the correct phase relationship so that the radio waves from the separate antennas add together to increase the radiation in a desired direction, while cancelling to suppress radiation in undesired directions.

Transmit beams may be quasi-co-located, meaning that they appear to the receiver (e.g., a UE) as having a same parameters, regardless of whether or not the transmitting antennas of the network node themselves are physically co-located. In NR, there are four types of quasi-co-location (QCL) relations. Specifically, a QCL relation of a given type means that certain parameters about a second reference RF signal on a second beam can be derived from information about a source reference RF signal on a source beam. Thus, if the source reference RF signal is QCL Type A, the receiver can use the source reference RF signal to estimate the Doppler shift, Doppler spread, average delay, and delay spread of a second reference RF signal transmitted on a same channel. If the source reference RF signal is QCL Type B, the receiver can use the source reference RF signal to estimate the Doppler shift and Doppler spread of a second reference RF signal transmitted on a same channel. If the source reference RF signal is QCL Type C, the receiver can use the source reference RF signal to estimate the Doppler shift and average delay of a second reference RF signal transmitted on a same channel. If the source reference RF signal is QCL Type D, the receiver can use the source reference RF signal to estimate the spatial receive parameter of a second reference RF signal transmitted on a same channel.

In receive beamforming, the receiver uses a receive beam to amplify RF signals detected on a given channel. For example, the receiver can increase the gain setting and/or adjust the phase setting of an array of antennas in a particular direction to amplify (e.g., to increase the gain level of) the RF signals received from that direction. Thus, when a receiver is said to beamform in a certain direction, it means the beam gain in that direction is high relative to the beam gain along other directions, or the beam gain in that direction is the highest compared to the beam gain in that direction of all other receive beams available to the receiver. This results in a stronger received signal strength (e.g., reference signal received power (RSRP), reference signal received quality (RSRQ), signal-to-interference-plus-noise ratio (SINR), etc.) of the RF signals received from that direction.

Transmit and receive beams may be spatially related. A spatial relation means that parameters for a second beam (e.g., a transmit or receive beam) for a second reference signal can be derived from information about a first beam (e.g., a receive beam or a transmit beam) for a first reference signal. For example, a UE may use a particular receive beam to receive a reference downlink reference signal (e.g., synchronization signal block (SSB)) from a base station. The UE can then form a transmit beam for sending an uplink reference signal (e.g., sounding reference signal (SRS)) to that base station based on the parameters of the receive beam.

Note that a "downlink" beam may be either a transmit beam or a receive beam, depending on the entity forming it. For example, if a base station is forming the downlink beam to transmit a reference signal to a UE, the downlink beam is a transmit beam. If the UE is forming the downlink beam, however, it is a receive beam to receive the downlink reference signal. Similarly, an "uplink" beam may be either a transmit beam or a receive beam, depending on the entity forming it. For example, if a base station is forming the uplink beam, it is an uplink receive beam, and if a UE is forming the uplink beam, it is an uplink transmit beam.

In 5G, the frequency spectrum in which wireless nodes (e.g., base stations 102/180, UEs 104/182) operate is divided into multiple frequency ranges, FR1 (from 450 to 6000 MHz), FR2 (from 24250 to 52600 MHz), FR3 (above 52600 MHz), and FR4 (between FR1 and FR2). mmW frequency bands generally include the FR2, FR3, and FR4 frequency ranges. As such, the terms "mmW" and "FR2" or "FR3" or "FR4" may generally be used interchangeably.

In a multi-carrier system, such as 5G, one of the carrier frequencies is referred to as the "primary carrier" or "anchor carrier" or "primary serving cell" or "PCell," and the remaining carrier frequencies are referred to as "secondary carriers" or "secondary serving cells" or "SCells." In carrier aggregation, the anchor carrier is the carrier operating on the primary frequency (e.g., FR1) utilized by a UE 104/182 and the cell in which the UE 104/182 either performs the initial radio resource control (RRC) connection establishment procedure or initiates the RRC connection re-establishment procedure. The primary carrier carries all common and UE-specific control channels, and may be a carrier in a licensed frequency (however, this is not always the case). A secondary carrier is a carrier operating on a second frequency (e.g., FR2) that may be configured once the RRC connection is established between the UE 104 and the anchor carrier and that may be used to provide additional radio resources. In some cases, the secondary carrier may be a carrier in an unlicensed frequency. The secondary carrier may contain only necessary signaling information and signals, for example, those that are UE-specific may not be present in the secondary carrier, since both primary uplink and downlink carriers are typically UE-specific. This means that different UEs 104/182 in a cell may have different downlink primary carriers. A same is true for the uplink primary carriers. The network is able to change the primary carrier of any UE 104/182 at any time. This is done, for example, to balance the load on different carriers. Because a "serving cell" (whether a PCell or an SCell) corresponds to a carrier frequency / component carrier over which some base station is communicating, the term "cell," "serving cell," "component carrier," "carrier frequency," and the like can be used interchangeably.

For example, still referring to FIG. 1, one of the frequencies utilized by the macro cell base stations 102 may be an anchor carrier (or "PCell") and other frequencies utilized by the macro cell base stations 102 and/or the mmW base station 180 may be secondary carriers ("SCells"). The simultaneous transmission and/or reception of multiple carriers enables the UE 104/182 to significantly increase its data transmission and/or reception rates. For example, two 20 MHz aggregated carriers in a multi-carrier system would theoretically lead to a two-fold increase in data rate (i.e., 40 MHz), compared to that attained by a single 20 MHz carrier.

The wireless communications system 100 may further include a UE 164 that may communicate with a macro cell base station 102 over a communication link 120 and/or the mmW base station 180 over a mmW communication link 184. For example, the macro cell base station 102 may support a PCell and one or more SCells for the UE 164 and the mmW base station 180 may support one or more SCells for the UE 164.

In the example of FIG. 1, any of the illustrated UEs (shown in FIG. 1 as a single UE 104 for simplicity) may receive signals 124 from one or more Earth orbiting space vehicles (SVs) 112 (e.g., satellites). In an aspect, the SVs 112 may be part of a satellite positioning system that a UE 104 can use as an independent source of location information. A satellite positioning system typically includes a system of transmitters (e.g., SVs 112) positioned to enable receivers (e.g., UEs 104) to determine their location on or above the Earth based, at least in part, on positioning signals (e.g., signals 124) received from the transmitters. Such a transmitter typically transmits a signal marked with a repeating pseudo-random noise (PN) code of a set number of chips. While typically located in SVs 112, transmitters may sometimes be located on ground-based control stations, base stations 102, and/or other UEs 104. A UE 104 may include one or more dedicated receivers specifically designed to receive signals 124 for deriving geo location information from the SVs 112.

In a satellite positioning system, the use of signals 124 can be augmented by various satellite-based augmentation systems (SBAS) that may be associated with or otherwise enabled for use with one or more global and/or regional navigation satellite systems. For example an SBAS may include an augmentation system(s) that provides integrity information, differential corrections, etc., such as the Wide Area Augmentation System (WAAS), the European Geostationary Navigation Overlay Service (EGNOS), the Multi-functional Satellite Augmentation System (MSAS), the Global Positioning System (GPS) Aided Geo Augmented Navigation or GPS and Geo Augmented Navigation system (GAGAN), and/or the like. Thus, as used herein, a satellite positioning system may include any combination of one or more global and/or regional navigation satellites associated with such one or more satellite positioning systems.

In an aspect, SVs 112 may additionally or alternatively be part of one or more non-terrestrial networks (NTNs). In an NTN, an SV 112 is connected to an earth station (also referred to as a ground station, NTN gateway, or gateway), which in turn is connected to an element in a 5G network, such as a modified base station 102 (without a terrestrial antenna) or a network node in a 5GC. This element would in turn provide access to other elements in the 5G network and ultimately to entities external to the 5G network, such as Internet web servers and other user devices. In that way, a UE 104 may receive communication signals (e.g., signals 124) from an SV 112 instead of, or in addition to, communication signals from a terrestrial base station 102.

The wireless communications system 100 may further include one or more UEs, such as UE 190, that connects indirectly to one or more communication networks via one or more device-to-device (D2D) peer-to-peer (P2P) links (referred to as "sidelinks"). In the example of FIG. 1, UE 190 has a D2D P2P link 192 with one of the UEs 104 connected to one of the base stations 102 (e.g., through which UE 190 may indirectly obtain cellular connectivity) and a D2D P2P link 194 with WLAN STA 152 connected to the WLAN AP 150 (through which UE 190 may indirectly obtain WLAN-based Internet connectivity). In an example, the D2D P2P links 192 and 194 may be supported with any well-known D2D RAT, such as LTE Direct (LTE-D), WiFi Direct (WiFi-D), Bluetooth^{®}, and so on.

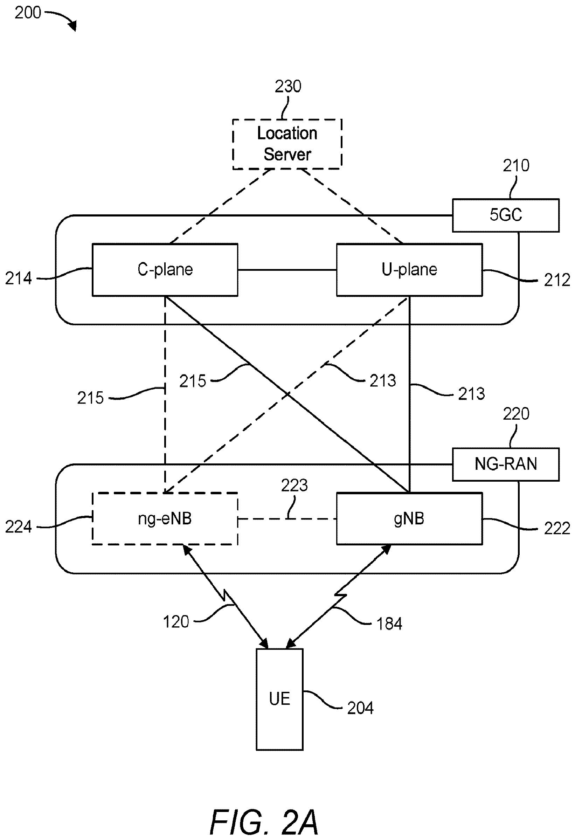

FIG. 2A illustrates an example wireless network structure 200. For example, a 5GC 210 (also referred to as a Next Generation Core (NGC)) can be viewed functionally as control plane (C-plane) functions 214 (e.g., UE registration, authentication, network access, gateway selection, etc.) and user plane (U-plane) functions 212, (e.g., UE gateway function, access to data networks, IP routing, etc.) which operate cooperatively to form the core network. User plane interface (NG-U) 213 and control plane interface (NG-C) 215 connect the gNB 222 to the 5GC 210 and specifically to the user plane functions 212 and control plane functions 214, respectively. In an additional configuration, an ng-eNB 224 may also be connected to the 5GC 210 via NG-C 215 to the control plane functions 214 and NG-U 213 to user plane functions 212. Further, ng-eNB 224 may directly communicate with gNB 222 via a backhaul connection 223. In some configurations, a Next Generation RAN (NG-RAN) 220 may have one or more gNBs 222, while other configurations include one or more of both ng-eNBs 224 and gNBs 222. Either (or both) gNB 222 or ng-eNB 224 may communicate with one or more UEs 204 (e.g., any of the UEs described herein).

Another optional aspect may include a location server 230, which may be in communication with the 5GC 210 to provide location assistance for UE(s) 204. The location server 230 can be implemented as a plurality of separate servers (e.g., physically separate servers, different software modules on a single server, different software modules spread across multiple physical servers, etc.), or alternately may each correspond to a single server. The location server 230 can be configured to support one or more location services for UEs 204 that can connect to the location server 230 via the core network, 5GC 210, and/or via the Internet (not illustrated). Further, the location server 230 may be integrated into a component of the core network, or alternatively may be external to the core network (e.g., a third party server, such as an original equipment manufacturer (OEM) server or service server).

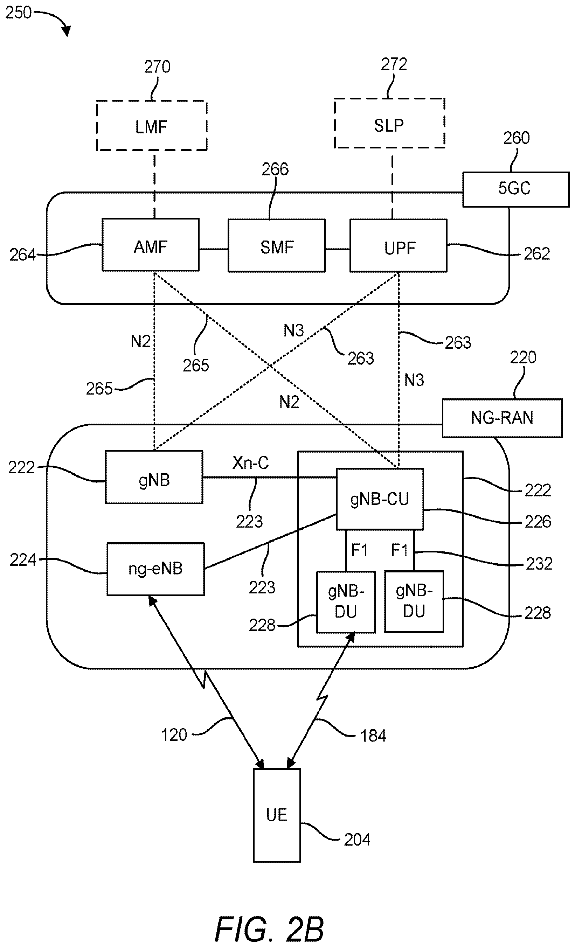

FIG. 2B illustrates another example wireless network structure 250. A 5GC 260 (which may correspond to 5GC 210 in FIG. 2A) can be viewed functionally as control plane functions, provided by an access and mobility management function (AMF) 264, and user plane functions, provided by a user plane function (UPF) 262, which operate cooperatively to form the core network (i.e., 5GC 260). The functions of the AMF 264 include registration management, connection management, reachability management, mobility management, lawful interception, transport for session management (SM) messages between one or more UEs 204 (e.g., any of the UEs described herein) and a session management function (SMF) 266, transparent proxy services for routing SM messages, access authentication and access authorization, transport for short message service (SMS) messages between the UE 204 and the short message service function (SMSF) (not shown), and security anchor functionality (SEAF). The AMF 264 also interacts with an authentication server function (AUSF) (not shown) and the UE 204, and receives the intermediate key that was established as a result of the UE 204 authentication process. In the case of authentication based on a UMTS (universal mobile telecommunications system) subscriber identity module (USIM), the AMF 264 retrieves the security material from the AUSF. The functions of the AMF 264 also include security context management (SCM). The SCM receives a key from the SEAF that it uses to derive access-network specific keys. The functionality of the AMF 264 also includes location services management for regulatory services, transport for location services messages between the UE 204 and a location management function (LMF) 270 (which acts as a location server 230), transport for location services messages between the NG-RAN 220 and the LMF 270, evolved packet system (EPS) bearer identifier allocation for interworking with the EPS, and UE 204 mobility event notification. In addition, the AMF 264 also supports functionalities for non-3GPP (Third Generation Partnership Project) access networks.

Functions of the UPF 262 include acting as an anchor point for intra-/inter-RAT mobility (when applicable), acting as an external protocol data unit (PDU) session point of interconnect to a data network (not shown), providing packet routing and forwarding, packet inspection, user plane policy rule enforcement (e.g., gating, redirection, traffic steering), lawful interception (user plane collection), traffic usage reporting, quality of service (QoS) handling for the user plane (e.g., uplink/ downlink rate enforcement, reflective QoS marking in the downlink), uplink traffic verification (service data flow (SDF) to QoS flow mapping), transport level packet marking in the uplink and downlink, downlink packet buffering and downlink data notification triggering, and sending and forwarding of one or more "end markers" to the source RAN node. The UPF 262 may also support transfer of location services messages over a user plane between the UE 204 and a location server, such as an SLP 272.

The functions of the SMF 266 include session management, UE Internet protocol (IP) address allocation and management, selection and control of user plane functions, configuration of traffic steering at the UPF 262 to route traffic to the proper destination, control of part of policy enforcement and QoS, and downlink data notification. The interface over which the SMF 266 communicates with the AMF 264 is referred to as the N11 interface.

Another optional aspect may include an LMF 270, which may be in communication with the 5GC 260 to provide location assistance for UEs 204. The LMF 270 can be implemented as a plurality of separate servers (e.g., physically separate servers, different software modules on a single server, different software modules spread across multiple physical servers, etc.), or alternately may each correspond to a single server. The LMF 270 can be configured to support one or more location services for UEs 204 that can connect to the LMF 270 via the core network, 5GC 260, and/or via the Internet (not illustrated). The SLP 272 may support similar functions to the LMF 270, but whereas the LMF 270 may communicate with the AMF 264, NG-RAN 220, and UEs 204 over a control plane (e.g., using interfaces and protocols intended to convey signaling messages and not voice or data), the SLP 272 may communicate with UEs 204 and external clients (not shown in FIG. 2B) over a user plane (e.g., using protocols intended to carry voice and/or data like the transmission control protocol (TCP) and/or IP).

User plane interface 263 and control plane interface 265 connect the 5GC 260, and specifically the UPF 262 and AMF 264, respectively, to one or more gNBs 222 and/or ng-eNBs 224 in the NG-RAN 220. The interface between gNB(s) 222 and/or ng-eNB(s) 224 and the AMF 264 is referred to as the "N2" interface, and the interface between gNB(s) 222 and/or ng-eNB(s) 224 and the UPF 262 is referred to as the "N3" interface. The gNB(s) 222 and/or ng-eNB(s) 224 of the NG-RAN 220 may communicate directly with each other via backhaul connections 223, referred to as the "Xn-C" interface. One or more of gNBs 222 and/or ng-eNBs 224 may communicate with one or more UEs 204 over a wireless interface, referred to as the "Uu" interface.

The functionality of a gNB 222 is divided between a gNB central unit (gNB-CU) 226 and one or more gNB distributed units (gNB-DUs) 228. The interface 232 between the gNB-CU 226 and the one or more gNB-DUs 228 is referred to as the "F1" interface. A gNB-CU 226 is a logical node that includes the base station functions of transferring user data, mobility control, radio access network sharing, positioning, session management, and the like, except for those functions allocated exclusively to the gNB-DU(s) 228. More specifically, the gNB-CU 226 hosts the radio resource control (RRC), service data adaptation protocol (SDAP), and packet data convergence protocol (PDCP) protocols of the gNB 222. A gNB-DU 228 is a logical node that hosts the radio link control (RLC), medium access control (MAC), and physical (PHY) layers of the gNB 222. Its operation is controlled by the gNB-CU 226. One gNB-DU 228 can support one or more cells, and one cell is supported by only one gNB-DU 228. Thus, a UE 204 communicates with the gNB-CU 226 via the RRC, SDAP, and PDCP layers and with a gNB-DU 228 via the RLC, MAC, and PHY layers.

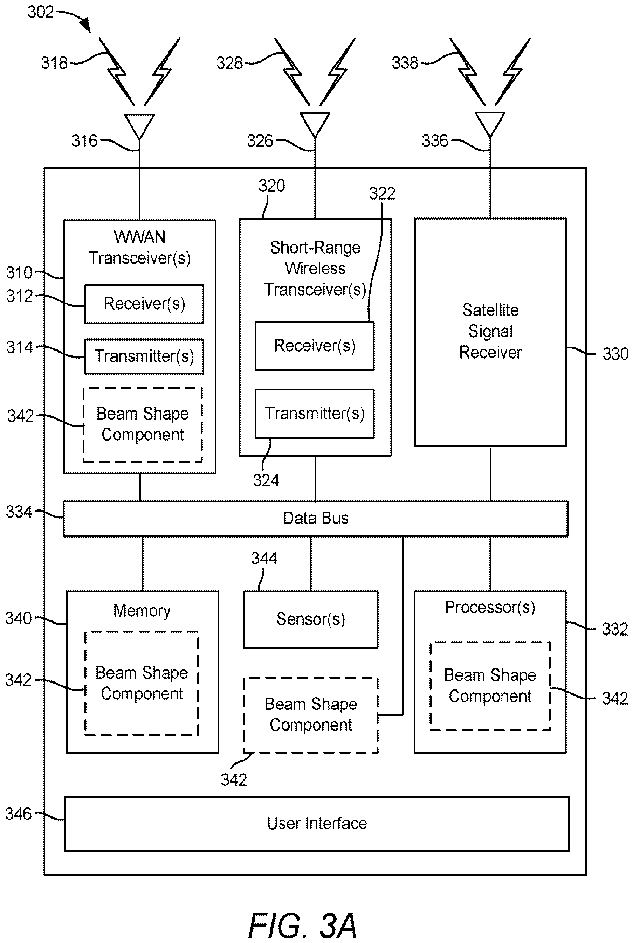

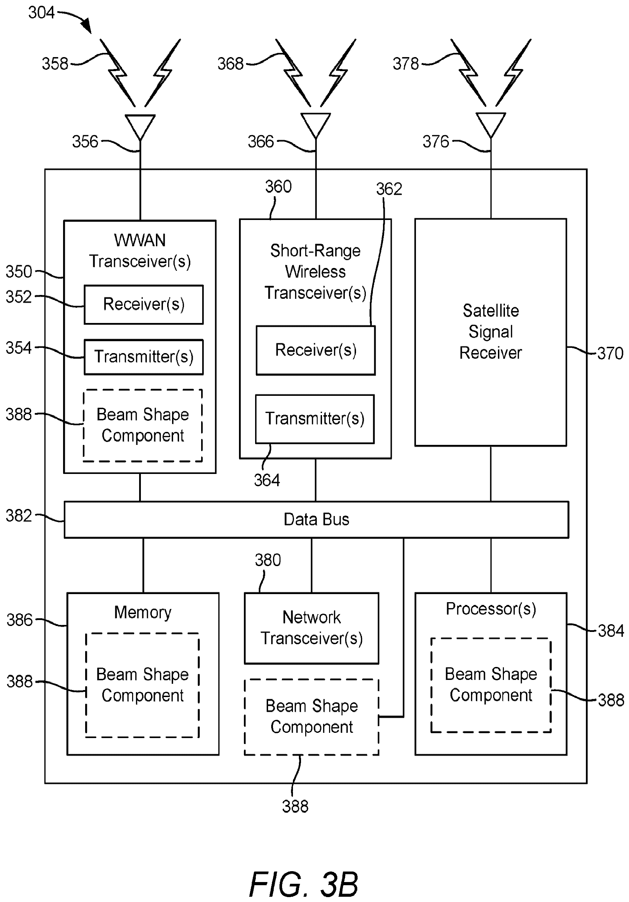

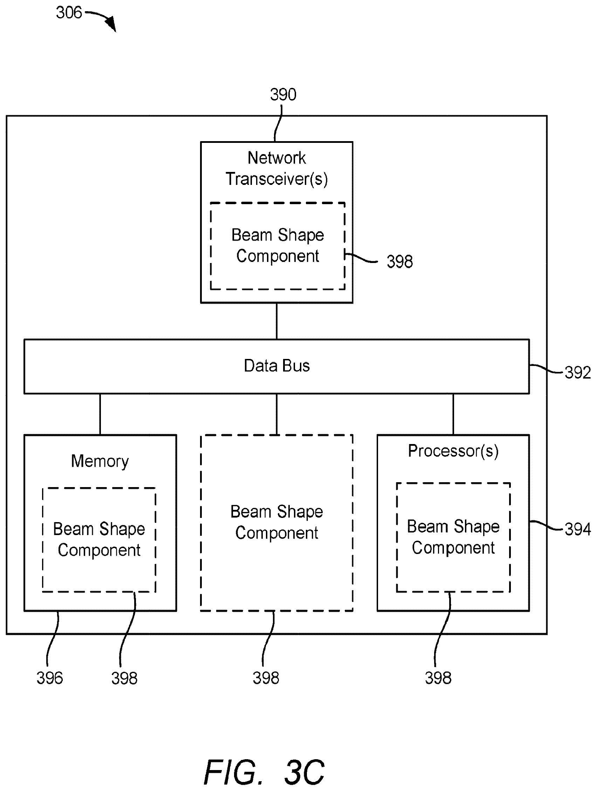

FIGS. 3A, 3B, and 3C illustrate several example components (represented by corresponding blocks) that may be incorporated into a UE 302 (which may correspond to any of the UEs described herein), a base station 304 (which may correspond to any of the base stations described herein), and a network entity 306 (which may correspond to or embody any of the network functions described herein, including the location server 230 and the LMF 270, or alternatively may be independent from the NG-RAN 220 and/or 5GC 210/260 infrastructure depicted in FIGS. 2A and 2B, such as a private network) to support the file transmission operations as taught herein. It will be appreciated that these components may be implemented in different types of apparatuses in different implementations (e.g., in an ASIC, in a system-on-chip (SoC), etc.). The illustrated components may also be incorporated into other apparatuses in a communication system. For example, other apparatuses in a system may include components similar to those described to provide similar functionality. Also, a given apparatus may contain one or more of the components. For example, an apparatus may include multiple transceiver components that enable the apparatus to operate on multiple carriers and/or communicate via different technologies.

The UE 302 and the base station 304 each include one or more wireless wide area network (WWAN) transceivers 310 and 350, respectively, providing means for communicating (e.g., means for transmitting, means for receiving, means for measuring, means for tuning, means for refraining from transmitting, etc.) via one or more wireless communication networks (not shown), such as an NR network, an LTE network, a GSM network, and/or the like. The WWAN transceivers 310 and 350 may each be connected to one or more antennas 316 and 356, respectively, for communicating with other network nodes, such as other UEs, access points, base stations (e.g., eNBs, gNBs), etc., via at least one designated RAT (e.g., NR, LTE, GSM, etc.) over a wireless communication medium of interest (e.g., some set of time/frequency resources in a particular frequency spectrum). The WWAN transceivers 310 and 350 may be variously configured for transmitting and encoding signals 318 and 358 (e.g., messages, indications, information, and so on), respectively, and, conversely, for receiving and decoding signals 318 and 358 (e.g., messages, indications, information, pilots, and so on), respectively, in accordance with the designated RAT. Specifically, the WWAN transceivers 310 and 350 include one or more transmitters 314 and 354, respectively, for transmitting and encoding signals 318 and 358, respectively, and one or more receivers 312 and 352, respectively, for receiving and decoding signals 318 and 358, respectively.

The UE 302 and the base station 304 each also include, at least in some cases, one or more short-range wireless transceivers 320 and 360, respectively. The short-range wireless transceivers 320 and 360 may be connected to one or more antennas 326 and 366, respectively, and provide means for communicating (e.g., means for transmitting, means for receiving, means for measuring, means for tuning, means for refraining from transmitting, etc.) with other network nodes, such as other UEs, access points, base stations, etc., via at least one designated RAT (e.g., WiFi, LTE-D, Bluetooth^{®}, Zigbee^{®}, Z-Wave^{®}, PC5, dedicated short-range communications (DSRC), wireless access for vehicular environments (WAVE), near-field communication (NFC), etc.) over a wireless communication medium of interest. The short-range wireless transceivers 320 and 360 may be variously configured for transmitting and encoding signals 328 and 368 (e.g., messages, indications, information, and so on), respectively, and, conversely, for receiving and decoding signals 328 and 368 (e.g., messages, indications, information, pilots, and so on), respectively, in accordance with the designated RAT. Specifically, the short-range wireless transceivers 320 and 360 include one or more transmitters 324 and 364, respectively, for transmitting and encoding signals 328 and 368, respectively, and one or more receivers 322 and 362, respectively, for receiving and decoding signals 328 and 368, respectively. As specific examples, the short-range wireless transceivers 320 and 360 may be WiFi transceivers, Bluetooth^{®} transceivers, Zigbee^{®} and/or Z-Wave^{®} transceivers, NFC transceivers, or vehicle-to-vehicle (V2V) and/or vehicle-to-everything (V2X) transceivers.

The UE 302 and the base station 304 also include, at least in some cases, satellite signal receivers 330 and 370. The satellite signal receivers 330 and 370 may be connected to one or more antennas 336 and 376, respectively, and may provide means for receiving and/or measuring satellite positioning/communication signals 338 and 378, respectively. Where the satellite signal receivers 330 and 370 are satellite positioning system receivers, the satellite positioning/communication signals 338 and 378 may be global positioning system (GPS) signals, global navigation satellite system (GLONASS) signals, Galileo signals, Beidou signals, Indian Regional Navigation Satellite System (NAVIC), Quasi-Zenith Satellite System (QZSS), etc. Where the satellite signal receivers 330 and 370 are non-terrestrial network (NTN) receivers, the satellite positioning/communication signals 338 and 378 may be communication signals (e.g., carrying control and/or user data) originating from a 5G network. The satellite signal receivers 330 and 370 may comprise any suitable hardware and/or software for receiving and processing satellite positioning/communication signals 338 and 378, respectively. The satellite signal receivers 330 and 370 may request information and operations as appropriate from the other systems, and, at least in some cases, perform calculations to determine locations of the UE 302 and the base station 304, respectively, using measurements obtained by any suitable satellite positioning system algorithm.

The base station 304 and the network entity 306 each include one or more network transceivers 380 and 390, respectively, providing means for communicating (e.g., means for transmitting, means for receiving, etc.) with other network entities (e.g., other base stations 304, other network entities 306). For example, the base station 304 may employ the one or more network transceivers 380 to communicate with other base stations 304 or network entities 306 over one or more wired or wireless backhaul links. As another example, the network entity 306 may employ the one or more network transceivers 390 to communicate with one or more base station 304 over one or more wired or wireless backhaul links, or with other network entities 306 over one or more wired or wireless core network interfaces.

A transceiver may be configured to communicate over a wired or wireless link. A transceiver (whether a wired transceiver or a wireless transceiver) includes transmitter circuitry (e.g., transmitters 314, 324, 354, 364) and receiver circuitry (e.g., receivers 312, 322, 352, 362). A transceiver may be an integrated device (e.g., embodying transmitter circuitry and receiver circuitry in a single device) in some implementations, may comprise separate transmitter circuitry and separate receiver circuitry in some implementations, or may be embodied in other ways in other implementations. The transmitter circuitry and receiver circuitry of a wired transceiver (e.g., network transceivers 380 and 390 in some implementations) may be coupled to one or more wired network interface ports. Wireless transmitter circuitry (e.g., transmitters 314, 324, 354, 364) may include or be coupled to a plurality of antennas (e.g., antennas 316, 326, 356, 366), such as an antenna array, that permits the respective apparatus (e.g., UE 302, base station 304) to perform transmit "beamforming," as described herein. Similarly, wireless receiver circuitry (e.g., receivers 312, 322, 352, 362) may include or be coupled to a plurality of antennas (e.g., antennas 316, 326, 356, 366), such as an antenna array, that permits the respective apparatus (e.g., UE 302, base station 304) to perform receive beamforming, as described herein. In an aspect, the transmitter circuitry and receiver circuitry may share a same plurality of antennas (e.g., antennas 316, 326, 356, 366), such that the respective apparatus can only receive or transmit at a given time, not both at a same time. A wireless transceiver (e.g., WWAN transceivers 310 and 350, short-range wireless transceivers 320 and 360) may also include a network listen module (NLM) or the like for performing various measurements.

As used herein, the various wireless transceivers (e.g., transceivers 310, 320, 350, and 360, and network transceivers 380 and 390 in some implementations) and wired transceivers (e.g., network transceivers 380 and 390 in some implementations) may generally be characterized as "a transceiver," "at least one transceiver," or "one or more transceivers." As such, whether a particular transceiver is a wired or wireless transceiver may be inferred from the type of communication performed. For example, backhaul communication between network devices or servers will generally relate to signaling via a wired transceiver, whereas wireless communication between a UE (e.g., UE 302) and a base station (e.g., base station 304) will generally relate to signaling via a wireless transceiver.

The UE 302, the base station 304, and the network entity 306 also include other components that may be used in conjunction with the operations as disclosed herein. The UE 302, the base station 304, and the network entity 306 include one or more processors 332, 384, and 394, respectively, for providing functionality relating to, for example, wireless communication, and for providing other processing functionality. The processors 332, 384, and 394 may therefore provide means for processing, such as means for determining, means for calculating, means for receiving, means for transmitting, means for indicating, etc. In an aspect, the processors 332, 384, and 394 may include, for example, one or more general purpose processors, multi-core processors, central processing units (CPUs), ASICs, digital signal processors (DSPs), field programmable gate arrays (FPGAs), other programmable logic devices or processing circuitry, or various combinations thereof.

The UE 302, the base station 304, and the network entity 306 include memory circuitry implementing memories 340, 386, and 396 (e.g., each including a memory device), respectively, for maintaining information (e.g., information indicative of reserved resources, thresholds, parameters, and so on). The memories 340, 386, and 396 may therefore provide means for storing, means for retrieving, means for maintaining, etc. In some cases, the UE 302, the base station 304, and the network entity 306 may include beam shape component 342, 388, and 398, respectively. The beam shape component 342, 388, and 398 may be hardware circuits that are part of or coupled to the processors 332, 384, and 394, respectively, that, when executed, cause the UE 302, the base station 304, and the network entity 306 to perform the functionality described herein. In other aspects, the beam shape component 342, 388, and 398 may be external to the processors 332, 384, and 394 (e.g., part of a modem processing system, integrated with another processing system, etc.). Alternatively, the beam shape component 342, 388, and 398 may be memory modules stored in the memories 340, 386, and 396, respectively, that, when executed by the processors 332, 384, and 394 (or a modem processing system, another processing system, etc.), cause the UE 302, the base station 304, and the network entity 306 to perform the functionality described herein. FIG. 3A illustrates possible locations of the beam shape component 342, which may be, for example, part of the one or more WWAN transceivers 310, the memory 340, the one or more processors 332, or any combination thereof, or may be a standalone component. FIG. 3B illustrates possible locations of the beam shape component 388, which may be, for example, part of the one or more WWAN transceivers 350, the memory 386, the one or more processors 384, or any combination thereof, or may be a standalone component. FIG. 3C illustrates possible locations of the beam shape component 398, which may be, for example, part of the one or more network transceivers 390, the memory 396, the one or more processors 394, or any combination thereof, or may be a standalone component.

The UE 302 may include one or more sensors 344 coupled to the one or more processors 332 to provide means for sensing or detecting movement and/or orientation information that is independent of motion data derived from signals received by the one or more WWAN transceivers 310, the one or more short-range wireless transceivers 320, and/or the satellite signal receiver 330. By way of example, the sensor(s) 344 may include an accelerometer (e.g., a micro-electrical mechanical systems (MEMS) device), a gyroscope, a geomagnetic sensor (e.g., a compass), an altimeter (e.g., a barometric pressure altimeter), and/or any other type of movement detection sensor. Moreover, the sensor(s) 344 may include a plurality of different types of devices and combine their outputs in order to provide motion information. For example, the sensor(s) 344 may use a combination of a multi-axis accelerometer and orientation sensors to provide the ability to compute positions in two-dimensional (2D) and/or three-dimensional (3D) coordinate systems.

In addition, the UE 302 includes a user interface 346 providing means for providing indications (e.g., audible and/or visual indications) to a user and/or for receiving user input (e.g., upon user actuation of a sensing device such a keypad, a touch screen, a microphone, and so on). Although not shown, the base station 304 and the network entity 306 may also include user interfaces.

Referring to the one or more processors 384 in more detail, in the downlink, IP packets from the network entity 306 may be provided to the processor 384. The one or more processors 384 may implement functionality for an RRC layer, a packet data convergence protocol (PDCP) layer, a radio link control (RLC) layer, and a medium access control (MAC) layer. The one or more processors 384 may provide RRC layer functionality associated with broadcasting of system information (e.g., master information block (MIB), system information blocks (SIBs)), RRC connection control (e.g., RRC connection paging, RRC connection establishment, RRC connection modification, and RRC connection release), inter-RAT mobility, and measurement configuration for UE measurement reporting; PDCP layer functionality associated with header compression/decompression, security (ciphering, deciphering, integrity protection, integrity verification), and handover support functions; RLC layer functionality associated with the transfer of upper layer PDUs, error correction through automatic repeat request (ARQ), concatenation, segmentation, and reassembly of RLC service data units (SDUs), re-segmentation of RLC data PDUs, and reordering of RLC data PDUs; and MAC layer functionality associated with mapping between logical channels and transport channels, scheduling information reporting, error correction, priority handling, and logical channel prioritization.

The transmitter 354 and the receiver 352 may implement Layer-1 (L1) functionality associated with various signal processing functions. Layer-1, which includes a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The transmitter 354 handles mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an orthogonal frequency division multiplexing (OFDM) subcarrier, multiplexed with a reference signal (e.g., pilot) in the time and/or frequency domain, and then combined together using an inverse fast Fourier transform (IFFT) to produce a physical channel carrying a time domain OFDM symbol stream. The OFDM symbol stream is spatially precoded to produce multiple spatial streams. Channel estimates from a channel estimator may be used to determine the coding and modulation scheme, as well as for spatial processing. The channel estimate may be derived from a reference signal and/or channel condition feedback transmitted by the UE 302. Each spatial stream may then be provided to one or more different antennas 356. The transmitter 354 may modulate an RF carrier with a respective spatial stream for transmission.

At the UE 302, the receiver 312 receives a signal through its respective antenna(s) 316. The receiver 312 recovers information modulated onto an RF carrier and provides the information to the one or more processors 332. The transmitter 314 and the receiver 312 implement Layer-1 functionality associated with various signal processing functions. The receiver 312 may perform spatial processing on the information to recover any spatial streams destined for the UE 302. If multiple spatial streams are destined for the UE 302, they may be combined by the receiver 312 into a single OFDM symbol stream. The receiver 312 then converts the OFDM symbol stream from the time-domain to the frequency domain using a fast Fourier transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by the base station 304. These soft decisions may be based on channel estimates computed by a channel estimator. The soft decisions are then decoded and de-interleaved to recover the data and control signals that were originally transmitted by the base station 304 on the physical channel. The data and control signals are then provided to the one or more processors 332, which implements Layer-3 (L3) and Layer-2 (L2) functionality.

In the uplink, the one or more processors 332 provides demultiplexing between transport and logical channels, packet reassembly, deciphering, header decompression, and control signal processing to recover IP packets from the core network. The one or more processors 332 are also responsible for error detection.

Similar to the functionality described in connection with the downlink transmission by the base station 304, the one or more processors 332 provides RRC layer functionality associated with system information (e.g., MIB, SIBs) acquisition, RRC connections, and measurement reporting; PDCP layer functionality associated with header compression/decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto transport blocks (TBs), demultiplexing of MAC SDUs from TBs, scheduling information reporting, error correction through hybrid automatic repeat request (HARQ), priority handling, and logical channel prioritization.

Channel estimates derived by the channel estimator from a reference signal or feedback transmitted by the base station 304 may be used by the transmitter 314 to select the appropriate coding and modulation schemes, and to facilitate spatial processing. The spatial streams generated by the transmitter 314 may be provided to different antenna(s) 316. The transmitter 314 may modulate an RF carrier with a respective spatial stream for transmission.

The uplink transmission is processed at the base station 304 in a manner similar to that described in connection with the receiver function at the UE 302. The receiver 352 receives a signal through its respective antenna(s) 356. The receiver 352 recovers information modulated onto an RF carrier and provides the information to the one or more processors 384.

In the uplink, the one or more processors 384 provides demultiplexing between transport and logical channels, packet reassembly, deciphering, header decompression, control signal processing to recover IP packets from the UE 302. IP packets from the one or more processors 384 may be provided to the core network. The one or more processors 384 are also responsible for error detection.

For convenience, the UE 302, the base station 304, and/or the network entity 306 are shown in FIGS. 3A, 3B, and 3C as including various components that may be configured according to the various examples described herein. It will be appreciated, however, that the illustrated components may have different functionality in different designs. In particular, various components in FIGS. 3A to 3C are optional in alternative configurations and the various aspects include configurations that may vary due to design choice, costs, use of the device, or other considerations. For example, in case of FIG. 3A, a particular implementation of UE 302 may omit the WWAN transceiver(s) 310 (e.g., a wearable device or tablet computer or PC or laptop may have Wi-Fi and/or Bluetooth capability without cellular capability), or may omit the short-range wireless transceiver(s) 320 (e.g., cellular-only, etc.), or may omit the satellite signal receiver 330, or may omit the sensor(s) 344, and so on. In another example, in case of FIG. 3B, a particular implementation of the base station 304 may omit the WWAN transceiver(s) 350 (e.g., a Wi-Fi "hotspot" access point without cellular capability), or may omit the short-range wireless transceiver(s) 360 (e.g., cellular-only, etc.), or may omit the satellite receiver 370, and so on. For brevity, illustration of the various alternative configurations is not provided herein, but would be readily understandable to one skilled in the art.

The various components of the UE 302, the base station 304, and the network entity 306 may be communicatively coupled to each other over data buses 334, 382, and 392, respectively. In an aspect, the data buses 334, 382, and 392 may form, or be part of, a communication interface of the UE 302, the base station 304, and the network entity 306, respectively. For example, where different logical entities are embodied in a same device (e.g., gNB and location server functionality incorporated into a same base station 304), the data buses 334, 382, and 392 may provide communication between them.

The components of FIGS. 3A, 3B, and 3C may be implemented in various ways. In some implementations, the components of FIGS. 3A, 3B, and 3C may be implemented in one or more circuits such as, for example, one or more processors and/or one or more ASICs (which may include one or more processors). Here, each circuit may use and/or incorporate at least one memory component for storing information or executable code used by the circuit to provide this functionality. For example, some or all of the functionality represented by blocks 310 to 346 may be implemented by processor and memory component(s) of the UE 302 (e.g., by execution of appropriate code and/or by appropriate configuration of processor components). Similarly, some or all of the functionality represented by blocks 350 to 388 may be implemented by processor and memory component(s) of the base station 304 (e.g., by execution of appropriate code and/or by appropriate configuration of processor components). Also, some or all of the functionality represented by blocks 390 to 398 may be implemented by processor and memory component(s) of the network entity 306 (e.g., by execution of appropriate code and/or by appropriate configuration of processor components). For simplicity, various operations, acts, and/or functions are described herein as being performed "by a UE," "by a base station," "by a network entity," etc. However, as will be appreciated, such operations, acts, and/or functions may actually be performed by specific components or combinations of components of the UE 302, base station 304, network entity 306, etc., such as the processors 332, 384, 394, the transceivers 310, 320, 350, and 360, the memories 340, 386, and 396, the beam shape component 342, 388, and 398, etc.

In some designs, the network entity 306 may be implemented as a core network component. In other designs, the network entity 306 may be distinct from a network operator or operation of the cellular network infrastructure (e.g., NG RAN 220 and/or 5GC 210/260). For example, the network entity 306 may be a component of a private network that may be configured to communicate with the UE 302 via the base station 304 or independently from the base station 304 (e.g., over a non-cellular communication link, such as WiFi).

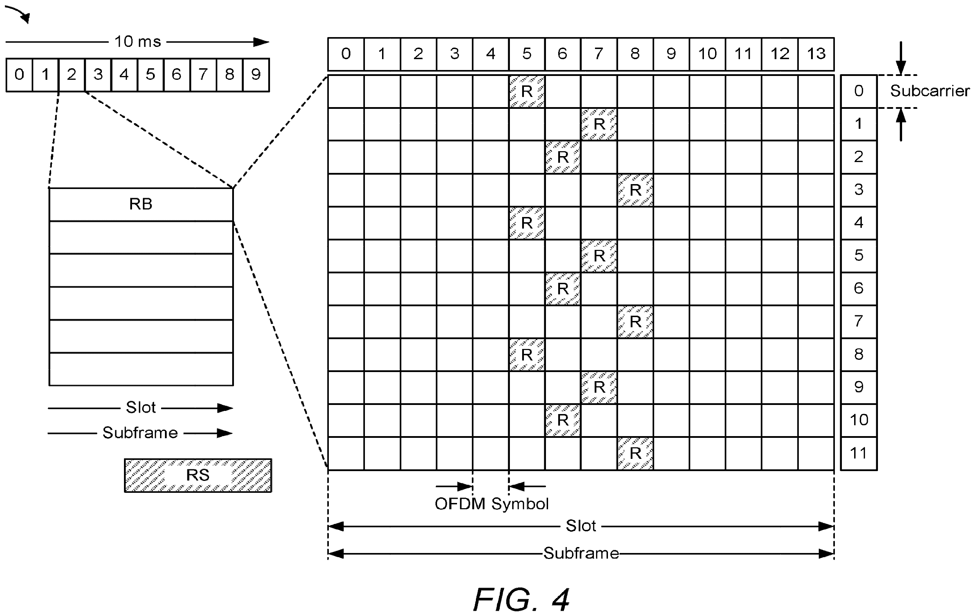

Various frame structures may be used to support downlink and uplink transmissions between network nodes (e.g., base stations and UEs). FIG. 4 is a diagram 400 illustrating an example frame structure, according to aspects of the disclosure. The frame structure may be a downlink or uplink frame structure. Other wireless communications technologies may have different frame structures and/or different channels.

LTE, and in some cases NR, utilizes OFDM on the downlink and single-carrier frequency division multiplexing (SC-FDM) on the uplink. Unlike LTE, however, NR has an option to use OFDM on the uplink as well. OFDM and SC-FDM partition the system bandwidth into multiple (K) orthogonal subcarriers, which are also commonly referred to as tones, bins, etc. Each subcarrier may be modulated with data. In general, modulation symbols are sent in the frequency domain with OFDM and in the time domain with SC-FDM. The spacing between adjacent subcarriers may be fixed, and the total number of subcarriers (K) may be dependent on the system bandwidth. For example, the spacing of the subcarriers may be 15 kilohertz (kHz) and the minimum resource allocation (resource block) may be 12 subcarriers (or 180 kHz). Consequently, the nominal FFT size may be equal to 128, 256, 512, 1024, or 2048 for system bandwidth of 1.25, 2.5, 5, 10, or 20 megahertz (MHz), respectively. The system bandwidth may also be partitioned into subbands. For example, a subband may cover 1.08 MHz (i.e., 6 resource blocks), and there may be 1, 2, 4, 8, or 16 subbands for system bandwidth of 1.25, 2.5, 5, 10, or 20 MHz, respectively.

LTE supports a single numerology (subcarrier spacing (SCS), symbol length, etc.). In contrast, NR may support multiple numerologies (µ), for example, subcarrier spacings of 15 kHz (µ=0), 30 kHz (µ=1), 60 kHz (µ=2), 120 kHz (µ=3), and 240 kHz (µ=4) or greater may be available. In each subcarrier spacing, there are 14 symbols per slot. For 15 kHz SCS (µ=0), there is one slot per subframe, 10 slots per frame, the slot duration is 1 millisecond (ms), the symbol duration is 66.7 microseconds (µs), and the maximum nominal system bandwidth (in MHz) with a 4K FFT size is 50. For 30 kHz SCS (µ=1), there are two slots per subframe, 20 slots per frame, the slot duration is 0.5 ms, the symbol duration is 33.3 µs, and the maximum nominal system bandwidth (in MHz) with a 4K FFT size is 100. For 60 kHz SCS (µ=2), there are four slots per subframe, 40 slots per frame, the slot duration is 0.25 ms, the symbol duration is 16.7 µs, and the maximum nominal system bandwidth (in MHz) with a 4K FFT size is 200. For 120 kHz SCS (µ=3), there are eight slots per subframe, 80 slots per frame, the slot duration is 0.125 ms, the symbol duration is 8.33 µs, and the maximum nominal system bandwidth (in MHz) with a 4K FFT size is 400. For 240 kHz SCS (µ=4), there are 16 slots per subframe, 160 slots per frame, the slot duration is 0.0625 ms, the symbol duration is 4.17 µs, and the maximum nominal system bandwidth (in MHz) with a 4K FFT size is 800.

In the example of FIG. 4, a numerology of 15 kHz is used. Thus, in the time domain, a 10 ms frame is divided into 10 equally sized subframes of 1 ms each, and each subframe includes one time slot. In FIG. 4, time is represented horizontally (on the X axis) with time increasing from left to right, while frequency is represented vertically (on the Y axis) with frequency increasing (or decreasing) from bottom to top.

A resource grid may be used to represent time slots, each time slot including one or more time-concurrent resource blocks (RBs) (also referred to as physical RBs (PRBs)) in the frequency domain. The resource grid is further divided into multiple resource elements (REs). An RE may correspond to one symbol length in the time domain and one subcarrier in the frequency domain. In the numerology of FIG. 4, for a normal cyclic prefix, an RB may contain 12 consecutive subcarriers in the frequency domain and seven consecutive symbols in the time domain, for a total of 84 REs. For an extended cyclic prefix, an RB may contain 12 consecutive subcarriers in the frequency domain and six consecutive symbols in the time domain, for a total of 72 REs. The number of bits carried by each RE depends on the modulation scheme.

Some of the REs may carry reference (pilot) signals (RS). The reference signals may include positioning reference signals (PRS), tracking reference signals (TRS), phase tracking reference signals (PTRS), cell-specific reference signals (CRS), channel state information reference signals (CSI-RS), demodulation reference signals (DMRS), primary synchronization signals (PSS), secondary synchronization signals (SSS), synchronization signal blocks (SSBs), sounding reference signals (SRS), etc., depending on whether the illustrated frame structure is used for uplink or downlink communication. FIG. 4 illustrates example locations of REs carrying a reference signal (labeled "R").

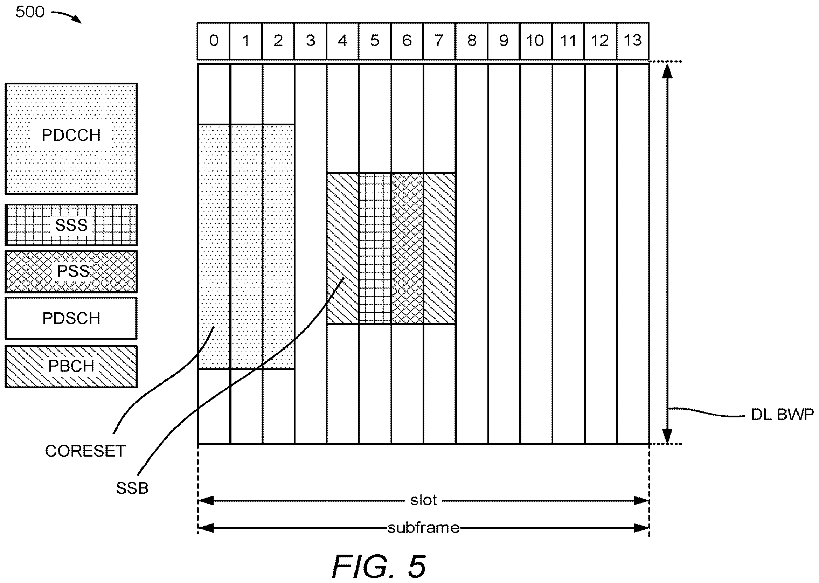

FIG. 5 is a diagram 500 illustrating various downlink channels within an example downlink slot. In FIG. 5, time is represented horizontally (on the X axis) with time increasing from left to right, while frequency is represented vertically (on the Y axis) with frequency increasing (or decreasing) from bottom to top. In the example of FIG. 5, a numerology of 15 kHz is used. Thus, in the time domain, the illustrated slot is one millisecond (ms) in length, divided into 14 symbols.

In NR, the channel bandwidth, or system bandwidth, is divided into multiple bandwidth parts (BWPs). A BWP is a contiguous set of RBs selected from a contiguous subset of the common RBs for a given numerology on a given carrier. Generally, a maximum of four BWPs can be specified in the downlink and uplink. That is, a UE can be configured with up to four BWPs on the downlink, and up to four BWPs on the uplink. Only one BWP (uplink or downlink) may be active at a given time, meaning the UE may only receive or transmit over one BWP at a time. On the downlink, the bandwidth of each BWP should be equal to or greater than the bandwidth of the SSB, but it may or may not contain the SSB.

Referring to FIG. 5, a primary synchronization signal (PSS) is used by a UE to determine subframe/symbol timing and a physical layer identity. A secondary synchronization signal (SSS) is used by a UE to determine a physical layer cell identity group number and radio frame timing. Based on the physical layer identity and the physical layer cell identity group number, the UE can determine a PCI. Based on the PCI, the UE can determine the locations of the aforementioned DL-RS. The physical broadcast channel (PBCH), which carries a master information block (MIB), may be logically grouped with the PSS and SSS to form an SSB (also referred to as an SS/PBCH). The MIB provides a number of RBs in the downlink system bandwidth and a system frame number (SFN). The physical downlink shared channel (PDSCH) carries user data, broadcast system information not transmitted through the PBCH, such as system information blocks (SIBs), and paging messages.

The physical downlink control channel (PDCCH) carries downlink control information (DCI) within one or more control channel elements (CCEs), each CCE including one or more RE group (REG) bundles (which may span multiple symbols in the time domain), each REG bundle including one or more REGs, each REG corresponding to 12 resource elements (one resource block) in the frequency domain and one OFDM symbol in the time domain. The set of physical resources used to carry the PDCCH/DCI is referred to in NR as the control resource set (CORESET). In NR, a PDCCH is confined to a single CORESET and is transmitted with its own DMRS. This enables UE-specific beamforming for the PDCCH.

In the example of FIG. 5, there is one CORESET per BWP, and the CORESET spans three symbols (although it may be only one or two symbols) in the time domain. Unlike LTE control channels, which occupy the entire system bandwidth, in NR, PDCCH channels are localized to a specific region in the frequency domain (i.e., a CORESET). Thus, the frequency component of the PDCCH shown in FIG. 5 is illustrated as less than a single BWP in the frequency domain. Note that although the illustrated CORESET is contiguous in the frequency domain, it need not be. In addition, the CORESET may span less than three symbols in the time domain.

The DCI within the PDCCH carries information about uplink resource allocation (persistent and non-persistent) and descriptions about downlink data transmitted to the UE, referred to as uplink and downlink grants, respectively. More specifically, the DCI indicates the resources scheduled for the downlink data channel (e.g., PDSCH) and the uplink data channel (e.g., physical uplink shared channel (PUSCH)). Multiple (e.g., up to eight) DCIs can be configured in the PDCCH, and these DCIs can have one of multiple formats. For example, there are different DCI formats for uplink scheduling, for downlink scheduling, for uplink transmit power control (TPC), etc. A PDCCH may be transported by 1, 2, 4, 8, or 16 CCEs in order to accommodate different DCI payload sizes or coding rates.

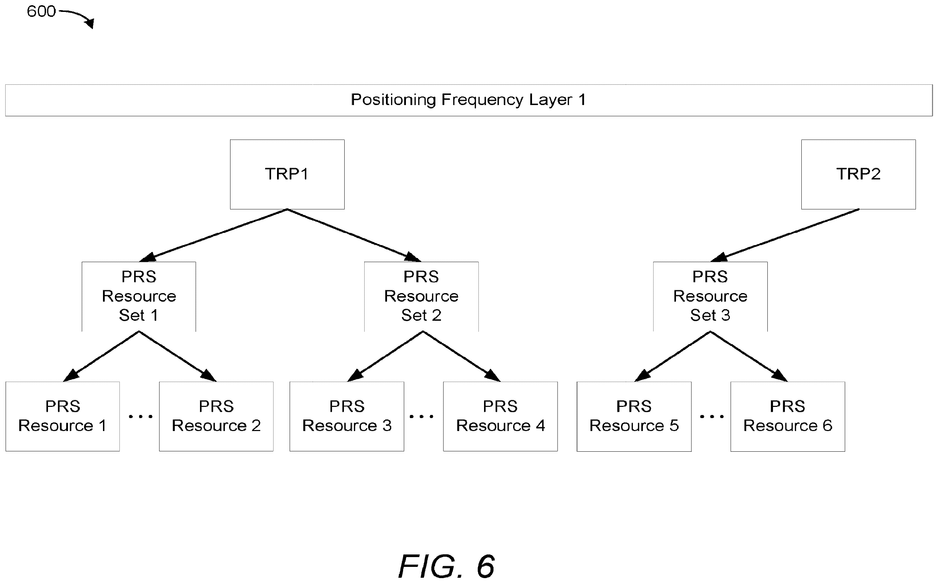

FIG. 6 is a diagram 600 illustrating an example PRS configuration for two TRPs (labeled "TRP1" and "TRP2") operating in a same positioning frequency layer (labeled "Positioning Frequency Layer 1"), according to aspects of the disclosure. For a positioning session, a UE may be provided with assistance data indicating the illustrated PRS configuration. In the example of FIG. 6, the first TRP ("TRP1") is associated with (e.g., transmits) two PRS resource sets, labeled "PRS Resource Set 1" and "PRS Resource Set 2," and the second TRP ("TRP2") is associated with one PRS resource set, labeled "PRS Resource Set 3." Each PRS resource set comprises at least two PRS resources. Specifically, the first PRS resource set ("PRS Resource Set 1") includes PRS resources labeled "PRS Resource 1" and "PRS Resource 2," the second PRS resource set ("PRS Resource Set 2") includes PRS resources labeled "PRS Resource 3" and "PRS Resource 4," and the third PRS resource set ("PRS Resource Set 3") includes PRS resources labeled "PRS Resource 5" and "PRS Resource 6."

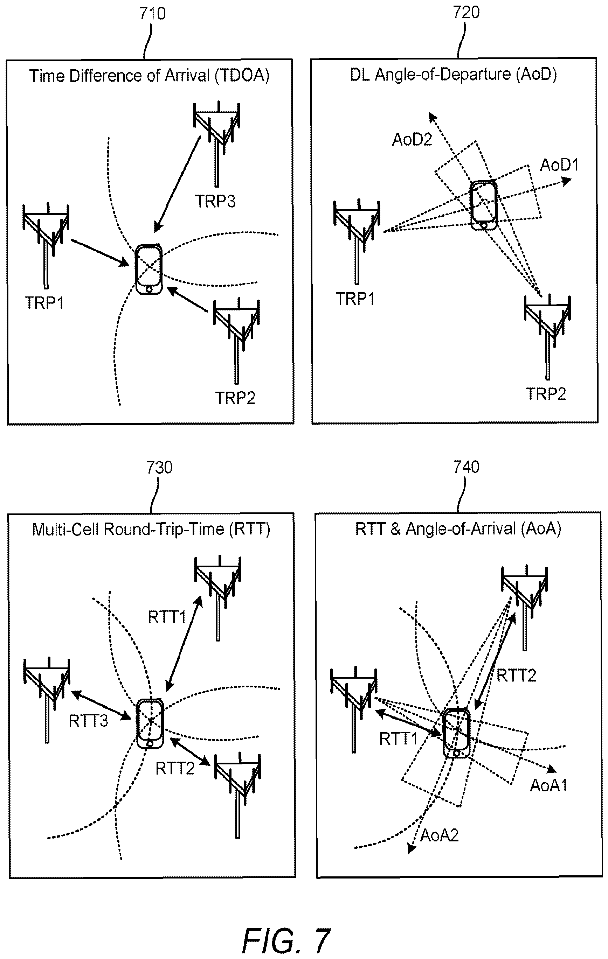

NR supports a number of cellular network-based positioning technologies, including downlink-based, uplink-based, and downlink-and-uplink-based positioning methods. Downlink-based positioning methods include observed time difference of arrival (OTDOA) in LTE, downlink time difference of arrival (DL-TDOA) in NR, and downlink angle-of-departure (DL-AoD) in NR. FIG. 7 illustrates examples of various positioning methods, according to aspects of the disclosure. In an OTDOA or DL-TDOA positioning procedure, illustrated by scenario 710, a UE measures the differences between the times of arrival (ToAs) of reference signals (e.g., positioning reference signals (PRS)) received from pairs of base stations, referred to as reference signal time difference (RSTD) or time difference of arrival (TDOA) measurements, and reports them to a positioning entity. More specifically, the UE receives the identifiers (IDs) of a reference base station (e.g., a serving base station) and multiple non-reference base stations in assistance data. The UE then measures the RSTD between the reference base station and each of the non-reference base stations. Based on the known locations of the involved base stations and the RSTD measurements, the positioning entity can estimate the UE's location.

For DL-AoD positioning, illustrated by scenario 720, the positioning entity uses a beam report from the UE of received signal strength measurements of multiple downlink transmit beams to determine the angle(s) between the UE and the transmitting base station(s). The positioning entity can then estimate the location of the UE based on the determined angle(s) and the known location(s) of the transmitting base station(s).

Uplink-based positioning methods include uplink time difference of arrival (UL-TDOA) and uplink angle-of-arrival (UL-AoA). UL-TDOA is similar to DL-TDOA, but is based on uplink reference signals (e.g., sounding reference signals (SRS)) transmitted by the UE. For UL-AoA positioning, one or more base stations measure the received signal strength of one or more uplink reference signals (e.g., SRS) received from a UE on one or more uplink receive beams. The positioning entity uses the signal strength measurements and the angle(s) of the receive beam(s) to determine the angle(s) between the UE and the base station(s). Based on the determined angle(s) and the known location(s) of the base station(s), the positioning entity can then estimate the location of the UE.

Downlink-and-uplink-based positioning methods include enhanced cell-ID (E-CID) positioning and multi-round-trip-time (RTT) positioning (also referred to as "multi-cell RTT" and "multi-RTT"). In an RTT procedure, a first entity (e.g., a base station or a UE) transmits a first RTT-related signal (e.g., a PRS or SRS) to a second entity (e.g., a UE or base station), which transmits a second RTT-related signal (e.g., an SRS or PRS) back to the first entity. Each entity measures the time difference between the time of arrival (ToA) of the received RTT-related signal and the transmission time of the transmitted RTT-related signal. This time difference is referred to as a reception-to-transmission (Rx-Tx) time difference. The Rx-Tx time difference measurement may be made, or may be adjusted, to include only a time difference between nearest subframe boundaries for the received and transmitted signals. Both entities may then send their Rx-Tx time difference measurement to a location server (e.g., an LMF 270), which calculates the round trip propagation time (i.e., RTT) between the two entities from the two Rx-Tx time difference measurements (e.g., as the sum of the two Rx-Tx time difference measurements). Alternatively, one entity may send its Rx-Tx time difference measurement to the other entity, which then calculates the RTT. The distance between the two entities can be determined from the RTT and the known signal speed (e.g., the speed of light). For multi-RTT positioning, illustrated by scenario 730, a first entity (e.g., a UE or base station) performs an RTT positioning procedure with multiple second entities (e.g., multiple base stations or UEs) to enable the location of the first entity to be determined (e.g., using multilateration) based on distances to, and the known locations of, the second entities. RTT and multi-RTT methods can be combined with other positioning techniques, such as UL-AoA and DL-AoD, to improve location accuracy, as illustrated by scenario 740.

The E-CID positioning method is based on radio resource management (RRM) measurements. In E-CID, the UE reports the serving cell ID, the timing advance (TA), and the identifiers, estimated timing, and signal strength of detected neighbor base stations. The location of the UE is then estimated based on this information and the known locations of the base station(s).

To assist positioning operations, a location server (e.g., location server 230, LMF 270, SLP 272) may provide assistance data to the UE. For example, the assistance data may include identifiers of the base stations (or the cells/TRPs of the base stations) from which to measure reference signals, the reference signal configuration parameters (e.g., the number of consecutive positioning subframes, periodicity of positioning subframes, muting sequence, frequency hopping sequence, reference signal identifier, reference signal bandwidth, etc.), and/or other parameters applicable to the particular positioning method. Alternatively, the assistance data may originate directly from the base stations themselves (e.g., in periodically broadcasted overhead messages, etc.). In some cases, the UE may be able to detect neighbor network nodes itself without the use of assistance data.

In the case of an OTDOA or DL-TDOA positioning procedure, the assistance data may further include an expected RSTD value and an associated uncertainty, or search window, around the expected RSTD. In some cases, the value range of the expected RSTD may be +/- 500 microseconds (µs). In some cases, when any of the resources used for the positioning measurement are in FR1, the value range for the uncertainty of the expected RSTD may be +/- 32 µs. In other cases, when all of the resources used for the positioning measurement(s) are in FR2, the value range for the uncertainty of the expected RSTD may be +/- 8 µs.

A location estimate may be referred to by other names, such as a position estimate, location, position, position fix, fix, or the like. A location estimate may be geodetic and comprise coordinates (e.g., latitude, longitude, and possibly altitude) or may be civic and comprise a street address, postal address, or some other verbal description of a location. A location estimate may further be defined relative to some other known location or defined in absolute terms (e.g., using latitude, longitude, and possibly altitude). A location estimate may include an expected error or uncertainty (e.g., by including an area or volume within which the location is expected to be included with some specified or default level of confidence).

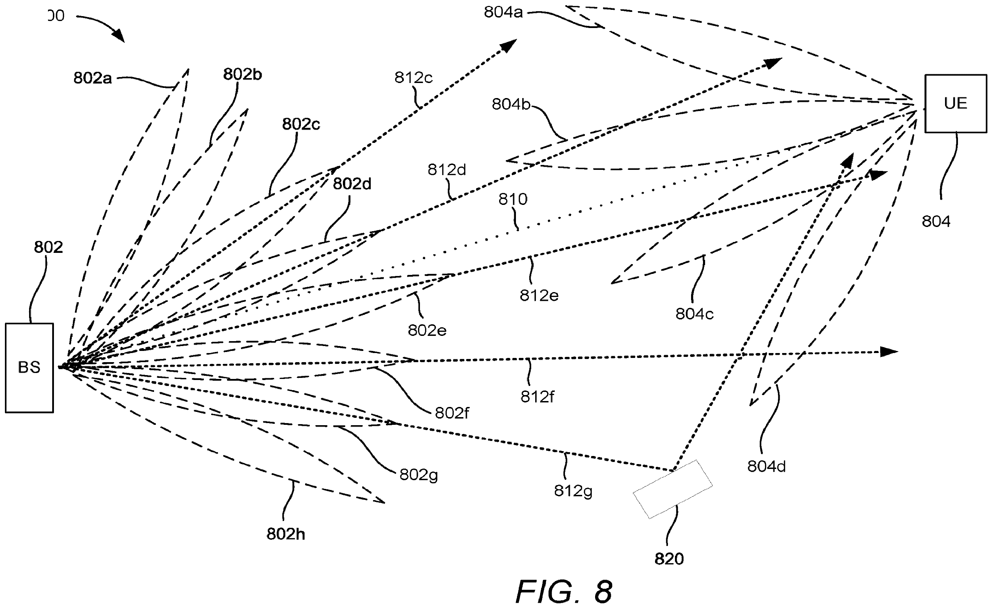

FIG. 8 is a diagram 800 illustrating a base station (BS) 802 (which may correspond to any of the base stations described herein) in communication with a UE 804 (which may correspond to any of the UEs described herein). Referring to FIG. 8, the base station 802 may transmit a beamformed signal to the UE 804 on one or more transmit beams 802a, 802b, 802c, 802d, 802e, 802f, 802g, 802h, each having a beam identifier that can be used by the UE 804 to identify the respective beam. Where the base station 802 is beamforming towards the UE 804 with a single array of antennas (e.g., a single TRP/cell), the base station 802 may perform a "beam sweep" by transmitting first beam 802a, then beam 802b, and so on until lastly transmitting beam 802h. Alternatively, the base station 802 may transmit beams 802a - 802h in some pattern, such as beam 802a, then beam 802h, then beam 802b, then beam 802g, and so on. Where the base station 802 is beamforming towards the UE 804 using multiple arrays of antennas (e.g., multiple TRPs/cells), each antenna array may perform a beam sweep of a subset of the beams 802a - 802h. Alternatively, each of beams 802a - 802h may correspond to a single antenna or antenna array.

FIG. 8 further illustrates the paths 812c, 812d, 812e, 812f, and 812g followed by the beamformed signal transmitted on beams 802c, 802d, 802e, 802f, and 802g, respectively. Each path 812c, 812d, 812e, 812f, 812g may correspond to a single "multipath" or, due to the propagation characteristics of radio frequency (RF) signals through the environment, may be comprised of a plurality (a cluster) of "multipaths." Note that although only the paths for beams 802c - 802g are shown, this is for simplicity, and the signal transmitted on each of beams 802a - 802h will follow some path. In the example shown, the paths 812c, 812d, 812e, and 812f are straight lines, while path 812g reflects off an obstacle 820 (e.g., a building, vehicle, terrain feature, etc.).

The UE 804 may receive the beamformed signal from the base station 802 on one or more receive beams 804a, 804b, 804c, 804d. Note that for simplicity, the beams illustrated in FIG. 8 represent either transmit beams or receive beams, depending on which of the base station 802 and the UE 804 is transmitting and which is receiving. Thus, the UE 804 may also transmit a beamformed signal to the base station 802 on one or more of the beams 804a - 804d, and the base station 802 may receive the beamformed signal from the UE 804 on one or more of the beams 802a - 802h.

In an aspect, the base station 802 and the UE 804 may perform beam training to align the transmit and receive beams of the base station 802 and the UE 804. For example, depending on environmental conditions and other factors, the base station 802 and the UE 804 may determine that the best transmit and receive beams are 802d and 804b, respectively, or beams 802e and 804c, respectively. The direction of the best transmit beam for the base station 802 may or may not be a same as the direction of the best receive beam, and likewise, the direction of the best receive beam for the UE 804 may or may not be a same as the direction of the best transmit beam. Note, however, that aligning the transmit and receive beams is not necessary to perform a downlink angle-of-departure (DL-AoD) or uplink angle-of-arrival (UL-AoA) positioning procedure.

To perform a DL-AoD positioning procedure, the base station 802 may transmit reference signals (e.g., PRS, CRS, TRS, CSI-RS, PSS, SSS, etc.) to the UE 804 on one or more of beams 802a - 802h, with each beam having a different transmit angle. The different transmit angles of the beams will result in different received signal strengths (e.g., RSRP, RSRQ, SINR, etc.) at the UE 804. Specifically, the received signal strength will be lower for transmit beams 802a - 802h that are further from the line of sight (LOS) path 810 between the base station 802 and the UE 804 than for transmit beams 802a - 802h that are closer to the LOS path 810.

In the example of FIG. 8, if the base station 802 transmits reference signals to the UE 804 on beams 802c, 802d, 802e, 802f, and 802g, then transmit beam 802e is best aligned with the LOS path 810, while transmit beams 802c, 802d, 802f, and 802g are not. As such, beam 802e is likely to have a higher received signal strength at the UE 804 than beams 802c, 802d, 802f, and 802g. Note that the reference signals transmitted on some beams (e.g., beams 802c and/or 802f) may not reach the UE 804, or energy reaching the UE 804 from these beams may be so low that the energy may not be detectable or at least can be ignored.

The UE 804 can report the received signal strength, and optionally, the associated measurement quality, of each measured transmit beam 802c - 802g to the base station 802, or alternatively, the identity of the transmit beam having the highest received signal strength (beam 802e in the example of FIG. 8). Alternatively or additionally, if the UE 804 is also engaged in a round-trip-time (RTT) or time-difference of arrival (TDOA) positioning session with at least one base station 802 or a plurality of base stations 802, respectively, the UE 804 can report reception-to-transmission (Rx-Tx) time difference or reference signal time difference (RSTD) measurements (and optionally the associated measurement qualities), respectively, to the serving base station 802 or other positioning entity. In any case, the positioning entity (e.g., the base station 802, a location server, a third-party client, UE 804, etc.) can estimate the angle from the base station 802 to the UE 804 as the AoD of the transmit beam having the highest received signal strength at the UE 804, here, transmit beam 802e.

In one aspect of DL-AoD-based positioning, where there is only one involved base station 802, the base station 802 and the UE 804 can perform a round-trip-time (RTT) procedure to determine the distance between the base station 802 and the UE 804. Thus, the positioning entity can determine both the direction to the UE 804 (using DL-AoD positioning) and the distance to the UE 804 (using RTT positioning) to estimate the location of the UE 804. Note that the AoD of the transmit beam having the highest received signal strength does not necessarily lie along the LOS path 810, as shown in FIG. 8. However, for DL-AoD-based positioning purposes, it is assumed to do so.

In another aspect of DL-AoD-based positioning, where there are multiple involved base stations 802, each involved base station 802 can report, to the serving base station 802, the determined AoD from the respective base station 802 to the UE 804, or the RSRP measurements. The serving base station 802 may then report the AoDs or RSRP measurements from the other involved base station(s) 802 to the positioning entity (e.g., UE 804 for UE-based positioning or a location server for UE-assisted positioning). With this information, and knowledge of the base stations' 802 geographic locations, the positioning entity can estimate a location of the UE 804 as the intersection of the determined AoDs. There should be at least two involved base stations 802 for a two-dimensional (2D) location solution, but as will be appreciated, the more base stations 802 that are involved in the positioning procedure, the more accurate the estimated location of the UE 804 will be.

To perform an UL-AoA positioning procedure, the UE 804 transmits uplink reference signals (e.g., UL-PRS, SRS, DMRS, etc.) to the base station 802 on one or more of uplink transmit beams 804a - 804d. The base station 802 receives the uplink reference signals on one or more of uplink receive beams 802a - 802h. The base station 802 determines the angle of the best receive beams 802a - 802h used to receive the one or more reference signals from the UE 804 as the AoA from the UE 804 to itself. Specifically, each of the receive beams 802a - 802h will result in a different received signal strength (e.g., RSRP, RSRQ, SINR, etc.) of the one or more reference signals at the base station 802. Further, the channel impulse response of the one or more reference signals will be smaller for receive beams 802a - 802h that are further from the actual LOS path between the base station 802 and the UE 804 than for receive beams 802a - 802h that are closer to the LOS path. Likewise, the received signal strength will be lower for receive beams 802a - 802h that are further from the LOS path than for receive beams 802a - 802h that are closer to the LOS path. As such, the base station 802 identifies the receive beam 802a - 802h that results in the highest received signal strength and, optionally, the strongest channel impulse response, and estimates the angle from itself to the UE 804 as the AoA of that receive beam 802a - 802h. Note that as with DL-AoD-based positioning, the AoA of the receive beam 802a - 802h resulting in the highest received signal strength (and strongest channel impulse response if measured) does not necessarily lie along the LOS path 810. However, for UL-AoA-based positioning purposes in FR2, it may be assumed to do so.

Note that while the UE 804 is illustrated as being capable of beamforming, this is not necessary for DL-AoD and UL-AoA positioning procedures. Rather, the UE 804 may receive and transmit on an omni-directional antenna.

Where the UE 804 is estimating its location (i.e., the UE is the positioning entity), it needs to obtain the geographic location of the base station 802. The UE 804 may obtain the location from, for example, the base station 802 itself or a location server (e.g., location server 230, LMF 270, SLP 272). With the knowledge of the distance to the base station 802 (based on the RTT or timing advance), the angle between the base station 802 and the UE 804 (based on the UL-AoA of the best receive beam 802a - 802h), and the known geographic location of the base station 802, the UE 804 can estimate its location.

Alternatively, where a positioning entity, such as the base station 802 or a location server, is estimating the location of the UE 804, the base station 802 reports the AoA of the receive beam 802a - 802h resulting in the highest received signal strength (and optionally strongest channel impulse response) of the reference signals received from the UE 804, or all received signal strengths and channel impulse responses for all receive beams 802 (which allows the positioning entity to determine the best receive beam 802a - 802h). The base station 802 may additionally report the Rx-Tx time difference to the UE 804. The positioning entity can then estimate the location of the UE 804 based on the UE's 804 distance to the base station 802, the AoA of the identified receive beam 802a - 802h, and the known geographic location of the base station 802.

A beam generally includes a main lobe and a number of side lobes. An antenna boresight direction is the axis of maximum gain (maximum radiated power) of a directional antenna, and is generally aligned with (centered) with the main lobe. The beam shape, which may generally correspond to the shape of the main lobe, may be used for both UE-assisted position estimation schemes and UE-based position estimation schemes. In some designs, for a UE-assisted DL-AoD position estimation scheme, one or more of the following may be used to enhance the signaling to the UE for the purpose of PRS resource(s) measurement and reporting, e.g.:
- Option 1: the LMF may explicitly identify adjacent beams in the assistance data (AD),
- Option 2: the LMF may send the beam information in the AD with an order of priority of PRS resources,
- Option 3: the LMF includes boresight direction information for each PRS resource in the AD, or
- Option 4: the LMF may send the beam information in the AD with an indicated subset of PRS resources.

In some designs, the beam/antenna information (generally referred to herein as antenna configuration) may optionally provided by the LMF to gNB, e.g.:
- Option 5: the gNB reports the antenna configuration including one or more of the number of antenna elements (vertical and horizontal), antenna spacing (horizontal delta dh and vertical delta dv). It has also been contemplated for the LMF to further provide precoder information for each PRS resource for discrete Fourier transform (DFT)-based beams (e.g., check whether the already reported boresight directions are sufficient, or whether more information is needed), antenna element pattern information, information related to panel/orientation, etc.
- Option 6: the gNB reports a mapping of angle and beam gains for each of the PRS resources. To this end, it has been contemplated for the gNB to further report a representation of the mapping may be reported, such as a parametric function approximating the beam response, or gain/angle table, beamwidth, intersection point of multiple beams (angle, RSRP) intersection point), etc.

In either option with respect to gNB beam/antenna information, the gNB beam/antenna information may optionally be provided to the UE by the LMF (e.g., via AD) for UE-based DL-AoD.

In some designs, for DFT-based methods, reporting the boresight direction might be sufficient to permit a device to approximate the beam shape. For non-standard beam shapes, the gNB may report a representation of the angle and beam gains in some form as noted in Option 6 above. However, this represents a large overhead as for each beam, the angle space (e.g., 0-360 degrees) may need to be quantized and the corresponding array gain needs to be provided. For example, if quantized at a precision of 5 degrees, the corresponding array gain may need to be provided in degree ranges of {0-5, 5-10, ..., 355-360}. In this case, the accuracy of the angle estimation will depend on the accuracy level of the beam representation.

In practice, due to hardware limitation, analog beamforming uses a codebook that permits a limited choice of beams. Each beam is obtained by applying a phase shift and an amplitude shift to the signal at each radiating element. The number of possible phase shifts (and amplitude shifts) is limited and is described by a certain number of bits. For example, assuming 2 phase shifter bits, ~90 degrees resolution may be achieved.

Aspects of the disclosure relate to reporting of beam shape information via antenna element shift (e.g., phase shift and/or amplitude shift) for particular antenna element(s) or transformation information (e.g., relative to a reference beam shape) for approximation of a beam shape to a position estimation entity. The position estimation entity may optionally forward the beam shape information to a UE (e.g., in case of UE-based position estimation). Such aspects may provide various technical advantages, such as facilitating the reporting of beam shape information without significant overhead.

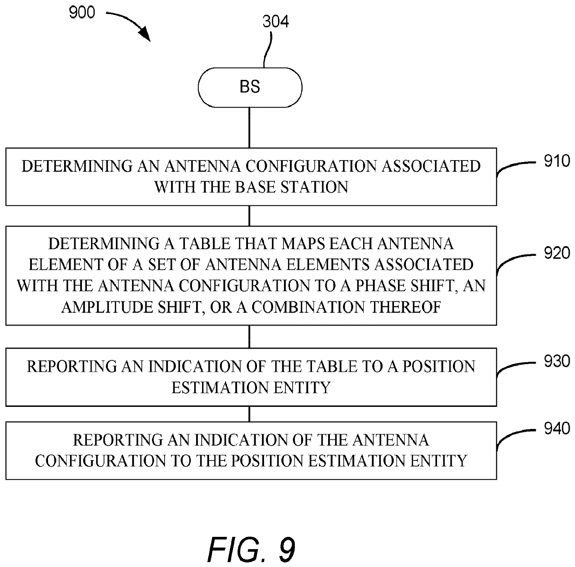

FIG. 9 illustrates an exemplary process 900 of communication, according to aspects of the disclosure. In an aspect, the process 900 may be performed by a BS, such as BS 304.

Referring to FIG. 9, at 910, BS 304 (e.g., beam shape component 388, processor(s) 394, etc.) determines an antenna configuration associated with the base station. In some designs, the antenna configuration includes a number of antenna elements among the set of antenna elements, an antenna spacing associated with the set of antenna elements, or a combination thereof. In some designs, the number of antenna elements includes a number of vertical antenna elements, a number of horizontal antenna elements, or a combination thereof. In some designs, the antenna spacing comprises vertical antenna spacing (dv), horizontal antenna spacing (dh), or a combination thereof. In some designs, the antenna configuration may include precoder information for each PRS resource for DFT-based beams (e.g., check whether the already reported boresight directions are sufficient, or whether more information is needed), antenna element pattern information, information related to panel/orientation, and so on.

Referring to FIG. 9, at 920, BS 304 (e.g., beam shape component 388, processor(s) 394, etc.) a table that maps each antenna element of a set of antenna elements associated with the antenna configuration to a phase shift, or an amplitude shift, or a combination thereof. The table of 920 can be configured in various ways. For example, the table maps the set of antenna elements per antenna element, or the table maps the set of antenna elements per group of antenna elements that are associated with a same phase shift, or a same amplitude shift, or a combination thereof (e.g., some antenna elements are mapped individually while other antenna elements are mapped in groups).

Referring to FIG. 9, at 930, BS 304 (e.g., transmitter 314 or 324, network transceiver(s) 380, etc.) reports an indication of the table to a position estimation entity (e.g., LMF integrated at BS 304 or remote entity such as network entity 306 or remote location server or UE in case of UE-based position estimation). In some designs, BS 304 itself may correspond to the position estimation entity, in which the reporting of 930 corresponds to an internal transfer of data between logical components.

Referring to FIG. 9, at 940, BS 304 (e.g., transmitter 314 or 324, network transceiver(s) 380, etc.) reports an indication of the antenna configuration to the position estimation entity (e.g., LMF integrated at BS 304 or remote entity such as network entity 306 or remote location server or UE in case of UE-based position estimation). In some designs, BS 304 itself may correspond to the position estimation entity, in which the reporting of 940 corresponds to an internal transfer of data between logical components.

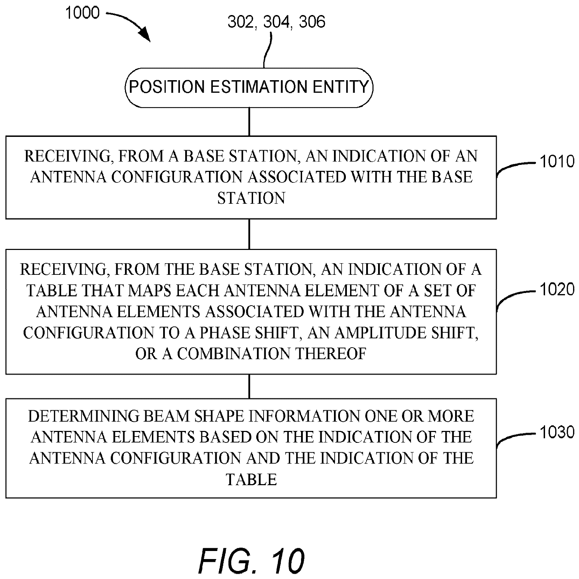

FIG. 10 illustrates an exemplary process 1000 of communication, according to aspects of the disclosure. In an aspect, the process 1000 may be performed by a position estimation entity, such as UE 302 (e.g., for UE-based position estimation) or BS 304 (e.g., LMF integrated in RAN) or network entity 306 (e.g., LMF integrated in core network component, a location server, etc.).

Referring to FIG. 10, at 1010, the position estimation entity (e.g., receiver 312 or 322 or 352 or 362, data bus 382, beam shape component 342 or 388 or 398, etc.) receives, from a base station, an indication of an antenna configuration associated with the base station. In some designs, includes a number of antenna elements among the set of antenna elements, an antenna spacing associated with the set of antenna elements, or a combination thereof. In some designs, the number of antenna elements includes a number of vertical antenna elements, a number of horizontal antenna elements, or a combination thereof. In some designs, the antenna spacing comprises vertical antenna spacing (dv), horizontal antenna spacing (dh), or a combination thereof. In some designs, the antenna configuration may include precoder information for each PRS resource for DFT-based beams (e.g., check whether the already reported boresight directions are sufficient, or whether more information is needed), antenna element pattern information, information related to panel/orientation, and so on. In some designs, BS 304 itself may correspond to the position estimation entity, in which the reception of 1010 corresponds to an internal transfer of data between logical components.

Referring to FIG. 10, at 1020, the position estimation entity (e.g., receiver 312 or 322 or 352 or 362, data bus 382, beam shape component 342 or 388 or 398, etc.) receives, from the base station, an indication of a table that maps each antenna element of a set of antenna elements associated with the antenna configuration to a phase shift, or an amplitude shift, or a combination thereof. In some designs, the antenna configuration includes a number of antenna elements among the set of antenna elements, an antenna spacing associated with the set of antenna elements, or a combination thereof. In some designs, the number of antenna elements includes a number of vertical antenna elements, a number of horizontal antenna elements, or a combination thereof. In some designs, the antenna spacing comprises vertical antenna spacing (dv), horizontal antenna spacing (dh), or a combination thereof. In some designs, the antenna configuration may include precoder information for each PRS resource for DFT-based beams (e.g., check whether the already reported boresight directions are sufficient, or whether more information is needed), antenna element pattern information, information related to panel/orientation, and so on. In some designs, BS 304 itself may correspond to the position estimation entity, in which the reception of 1020 corresponds to an internal transfer of data between logical components.

Referring to FIG. 10, at 1030, the position estimation entity (e.g., processor(s) 332 or 384 or 394, beam shape component 342 or 388 or 398, etc.) determines beam shape information for at least one antenna element based on the indication of the antenna configuration and the indication of the table. In other designs, (e.g., UE for UE-based position estimation or network entity for UE-assisted position estimation), the position estimation entity may factor the beam shape information into a position estimation procedure at the position estimation entity to derive a location of the target UE, which may then be reported to the target UE or some other entity.

Referring to FIGS. 9-10, in some designs, the indication of the table (e.g., which may be used to derive the beam shape) is communicated via location assistance data (e.g., via broadcast). In this case, the location assistance data may be periodically broadcast to UEs (e.g., via SIB) with a relatively high overhead. In other designs, the indication of the table is communicated to the position estimation entity (e.g., LMF, UE, etc.) on-demand (e.g., to reduce overhead). In this case, the indication of the table may be provided based on a target quality of service (e.g., request an on-demand indication of the table if there is a high target quality of service, and otherwise skip such a request).

Referring to FIGS. 9-10, in some designs, the table maps the set of antenna elements per antenna element, or the table maps the set of antenna elements per group of antenna elements that are associated with a same phase shift, or a same amplitude shift, or a combination thereof. In an example, group-based mapping may be implemented to reduce overhead, particularly for large antenna arrays.

Referring to FIGS. 9-10, in some designs, the table maps each antenna element of the set of antenna elements to at least the phase shift. In some designs, the table maps at least one antenna element of the set of antenna elements to both the phase shift and the amplitude shift. In an example, the phase shift mapping may be mandatory, while the amplitude shift may be optional.

Referring to FIGS. 9-10, in some designs, the indication of the table further specifies, for at least one antenna element, an association with one or more PRS resources. For example, different PRS resources can employ different beams. Hence, reporting of the mapping via the table may indicate the PRS resources to which respective antenna elements pertain.

Referring to FIGS. 9-10, in some designs, the indication of the table and the indication of the antenna configuration are reported via a single measurement report, or the indication of the table and the indication of the antenna configuration are reported via multiple (e.g., separate) measurement reports.

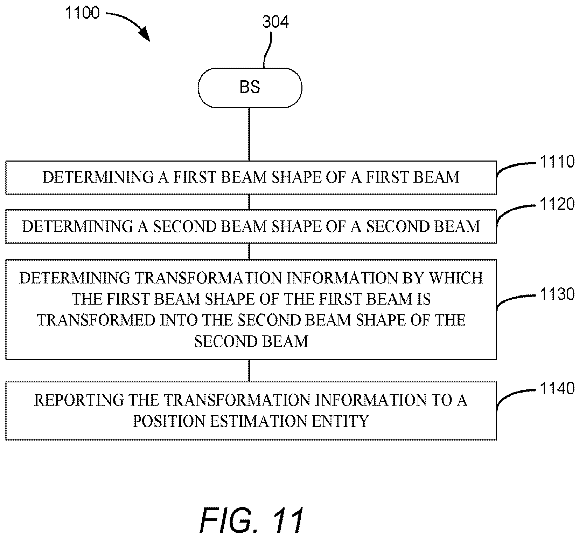

FIG. 11 illustrates an exemplary process 1100 of communication, according to aspects of the disclosure. In an aspect, the process 1100 may be performed by a BS, such as BS 304.

Referring to FIG. 11, at 1110, BS 304 (e.g., beam shape component 388, processor(s) 394, etc.) determines a first beam shape of a first beam. In some designs, the first beam may correspond to a reference beam associated with a known beam shape. In some designs, the first beam shape may be defined in terms of boresight direction, Azimuth degree boundaries or Azimuth degree range, elevation or altitude degrees or degree range, a polynomial function, and so on.

Referring to FIG. 11, at 1120, BS 304 (e.g., beam shape component 388, processor(s) 394, etc.) determines a second beam shape of a second beam. In some designs, the second beam shape may be defined in terms of boresight direction, Azimuth degree boundaries or Azimuth degree range, elevation or altitude degrees or degree range, a polynomial function, and so on.

Referring to FIG. 11, at 1130, BS 304 (e.g., beam shape component 388, processor(s) 394, etc.) determines transformation information by which the first beam shape of the first beam is transformed into the second beam shape of the second beam. Examples of transformation information are provided below in more detail.

Referring to FIG. 11, at 1140, BS 304 (e.g., transmitter 314 or 324, network transceiver(s) 380, etc.) reports the transformation information to a position estimation entity (e.g., LMF integrated at BS 304 or remote entity such as network entity 306 or remote location server or UE in case of UE-based position estimation). In some designs, BS 304 itself may correspond to the position estimation entity, in which the reporting of 1140 corresponds to an internal transfer of data between logical components.

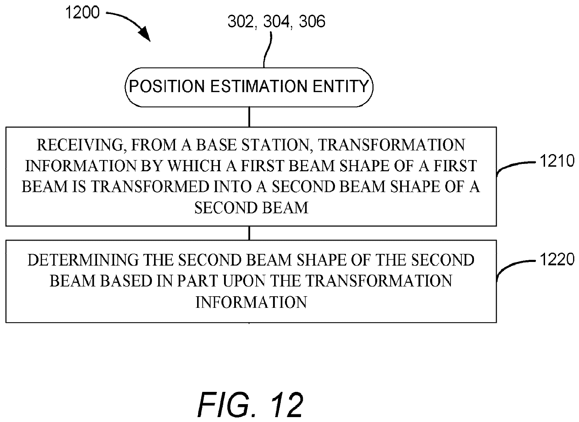

FIG. 12 illustrates an exemplary process 1200 of communication, according to aspects of the disclosure. In an aspect, the process 1200 may be performed by a position estimation entity, such as UE 302 (e.g., for UE-based position estimation) or BS 304 (e.g., LMF integrated in RAN) or network entity 306 (e.g., LMF integrated in core network component, a location server, etc.).

Referring to FIG. 12, at 1210, the position estimation entity (e.g., receiver 312 or 322 or 352 or 362, data bus 382, beam shape component 342 or 388 or 398, etc.) receives, from a base station, transformation information by which a first beam shape of a first beam is transformed into a second beam shape of a second beam. In some designs, BS 304 itself may correspond to the position estimation entity, in which the reception of 1210 corresponds to an internal transfer of data between logical components.

Referring to FIG. 12, at 1220, BS 304 (e.g., beam shape component 388, processor(s) 394, etc.) determines the second beam shape of the second beam based in part upon the transformation information. In some designs, (e.g., UE for UE-based position estimation or network entity for UE-assisted position estimation), the position estimation entity may factor the second beam shape of the second beam into a position estimation procedure at the position estimation entity to derive a location of the target UE, which may then be reported to the target UE or some other entity.

Referring to FIGS. 11-12, in some designs, the transformation information (e.g., which may be used to derive the beam shape) is communicated via location assistance data (e.g., via broadcast). In this case, the location assistance data may be periodically broadcast to UEs (e.g., via SIB) with a relatively high overhead. In other designs, the transformation information is communicated to the position estimation entity (e.g., LMF, UE, etc.) on-demand (e.g., to reduce overhead). In this case, the transformation information may be provided based on a target quality of service (e.g., request an on-demand transformation information if there is a high target quality of service, and otherwise skip such a request).

Referring to FIGS. 11-12, in some designs, the transformation information comprises rotation information, translation information, or a combination thereof. In case of rotation, in an example, two beams can be transmitted from same TRP, but point in different directions. In this case, a rotation is sufficient to describe (or transform) one beam with respect to another beam. In case of translation, in an example, beam 1 is transmitted from TRP 1, and beam 2 is transmitted from TRP2. In this case, a translation can represent the location of TRP 2 with respect to TRP 1, in addition to potentially specifying a rotation. For example, assume that the first beam (Beam 1) and the second beam (Beam 2) are associated with the base station (gNB1). In this case, Beam 1 of gNB1 may be rotated by (theta, phi) degrees in azimuth and elevation to become Beam 2 for gNB1. In another example, assume that the first beam (Beam 1) and the second beam (Beam 2) are associated with different base stations (gNB1 and gNB2). For example, the first beam is associated with the base station (gNB1) and the second beam is associated with another base station (gNB2). In this case, Beam 1 of gNB1 may be rotated by (theta, phi) degrees in azimuth and elevation can become Beam 1 for gNB2. Alternatively, the second beam is associated with the base station (gNB1) and the first beam is associated with another base station (gNB2). For example, the reference beam and 'transformed' beam can be associated with different gNBs in cases where the respective gNBs share beam shapes (e.g., the respective gNBs may be using same codebook or in general different codebooks where some beams from codebook 1 of gNB1 can be mapped to some beams from codebook 2 of gNB2).

Referring to FIGS. 11-12, in some designs as noted above, the transformation information comprises an Azimuth degree offset, an elevation degree offset, or a combination thereof (e.g., see examples of (theta, phi) rotations or offsets as noted above).

Referring to FIGS. 11-12, in some designs, the position estimation entity may send the base station a template for beam shapes. For example, the template may include a set of reference beams (e.g., one or more) for which a beam shape is known or defined (e.g., by specifying phase and amplitude bits). Then, other beams may be defined via reference to a respective reference beam (e.g., rotation and/or translation relative to this respective reference beam). In this case, the transformation information may be based on this template. In some designs, the template may be configured in the form of a codebook such that the gNB may define a beam by specifying a transformation (e.g., rotation and/or translation) with respect to the reference beam.

In the detailed description above it can be seen that different features are grouped together in examples. This manner of disclosure should not be understood as an intention that the example clauses have more features than are explicitly mentioned in each clause. Rather, the various aspects of the disclosure may include fewer than all features of an individual example clause disclosed. Therefore, the following clauses should hereby be deemed to be incorporated in the description, wherein each clause by itself can stand as a separate example. Although each dependent clause can refer in the clauses to a specific combination with one of the other clauses, the aspect(s) of that dependent clause are not limited to the specific combination. It will be appreciated that other example clauses can also include a combination of the dependent clause aspect(s) with the subject matter of any other dependent clause or independent clause or a combination of any feature with other dependent and independent clauses. The various aspects disclosed herein expressly include these combinations, unless it is explicitly expressed or can be readily inferred that a specific combination is not intended (e.g., contradictory aspects, such as defining an element as both an insulator and a conductor). Furthermore, it is also intended that aspects of a clause can be included in any other independent clause, even if the clause is not directly dependent on the independent clause.

Implementation examples are described in the following numbered clauses:
Clause 1. A method of operating a base station, comprising: determining an antenna configuration associated with the base station; determining a table that maps each antenna element of a set of antenna elements associated with the antenna configuration to a phase shift, or an amplitude shift, or a combination thereof; reporting an indication of the table to a position estimation entity; and reporting an indication of the antenna configuration to the position estimation entity.
Clause 2. The method of clause 1, wherein the table maps the set of antenna elements per antenna element, or wherein the table maps the set of antenna elements per group of antenna elements that are associated with a same phase shift, or a same amplitude shift, or a combination thereof.
Clause 3. The method of any of clauses 1 to 2, wherein the antenna configuration includes a number of antenna elements among the set of antenna elements, an antenna spacing associated with the set of antenna elements, or a combination thereof.
Clause 4. The method of clause 3, wherein the number of antenna elements comprises a number of vertical antenna elements, a number of horizontal antenna elements, or a combination thereof.
Clause 5. The method of any of clauses 3 to 4, wherein the antenna spacing comprises vertical antenna spacing, horizontal antenna spacing, or a combination thereof.
Clause 6. The method of any of clauses 1 to 5, wherein the table maps each antenna element of the set of antenna elements to at least the phase shift.
Clause 7. The method of clause 6, wherein the table maps at least one antenna element of the set of antenna elements to both the phase shift and the amplitude shift.
Clause 8. The method of any of clauses 1 to 7, wherein the indication of the table further specifies, for at least one antenna element, an association with one or more positioning reference signal (PRS) resources.
Clause 9. The method of any of clauses 1 to 8, wherein the indication of the table and the indication of the antenna configuration are reported via a single measurement report, or wherein the indication of the table and the indication of the antenna configuration are reported via multiple measurement reports.
Clause 10. The method of any of clauses 1 to 9, wherein the indication of the table is reported via location assistance data, or wherein the indication of the table is reported on-demand.
Clause 11. A method of operating a position estimation entity, comprising: receiving, from a base station, an indication of an antenna configuration associated with the base station; receiving, from the base station, an indication of a table that maps each antenna element of a set of antenna elements associated with the antenna configuration to a phase shift, or an amplitude shift, or a combination thereof; and determining beam shape information one or more antenna elements based on the indication of the antenna configuration and the indication of the table.
Clause 12. The method of clause 11, wherein the indication of the table is received via location assistance data, or wherein the indication of the table is received on-demand.
Clause 13. The method of any of clauses 11 to 12, wherein the table maps the set of antenna elements per antenna element, or wherein the table maps the set of antenna elements per group of antenna elements that are associated with a same phase shift, or a same amplitude shift, or a combination thereof.
Clause 14. The method of any of clauses 11 to 13, wherein the antenna configuration includes a number of antenna elements among the set of antenna elements, an antenna spacing associated with the set of antenna elements, or a combination thereof.
Clause 15. The method of clause 14, wherein the number of antenna elements comprises a number of vertical antenna elements, a number of horizontal antenna elements, or a combination thereof.
Clause 16. The method of any of clauses 14 to 15, wherein the antenna spacing comprises vertical antenna spacing, horizontal antenna spacing, or a combination thereof.
Clause 17. The method of any of clauses 11 to 16, wherein the table maps each antenna element of the set of antenna elements to at least the phase shift.
Clause 18. The method of clause 17, wherein the table maps at least one antenna element of the set of antenna elements to both the phase shift and the amplitude shift.
Clause 19. The method of any of clauses 11 to 18, wherein the indication of the table further specifies, for at least one antenna element, an association with one or more positioning reference signal (PRS) resources.
Clause 20. The method of any of clauses 11 to 19, wherein the indication of the table and the indication of the antenna configuration are reported via a single measurement report, or wherein the indication of the table and the indication of the antenna configuration are reported via multiple measurement reports.
Clause 21. A method of operating a base station, comprising: determining a first beam shape of a first beam; determining a second beam shape of a second beam; determining transformation information by which the first beam shape of the first beam is transformed into the second beam shape of the second beam; and reporting the transformation information to a position estimation entity.
Clause 22. The method of clause 21, wherein the transformation information comprises rotation information, translation information, or a combination thereof.
Clause 23. The method of any of clauses 21 to 22, wherein the first beam and the second beam are associated with the base station.
Clause 24. The method of any of clauses 21 to 23, wherein the first beam is associated with the base station and the second beam is associated with another base station.
Clause 25. The method of any of clauses 21 to 24, wherein the second beam is associated with the base station and the first beam is associated with another base station.
Clause 26. The method of any of clauses 21 to 25, wherein the first beam is a reference beam associated with a known beam shape.
Clause 27. The method of any of clauses 21 to 26, wherein the transformation information comprises an Azimuth degree offset, an elevation degree offset, or a combination thereof.
Clause 28. The method of any of clauses 21 to 27, further comprising: receiving, from the position estimation entity, a template for beam shapes, wherein the transformation information is based in part upon the template.
Clause 29. The method of any of clauses 21 to 28, wherein the transformation information is reported via location assistance data, or wherein the transformation information is reported on-demand.
Clause 30. A method of operating a position estimation entity, comprising: receiving, from a base station, transformation information by which a first beam shape of a first beam is transformed into a second beam shape of a second beam; and determining the second beam shape of the second beam based in part upon the transformation information.
Clause 31. The method of clause 30, wherein the transformation information is received via location assistance data, or wherein the transformation information is received on-demand.
Clause 32. The method of any of clauses 30 to 31, wherein the transformation information comprises rotation information, translation information, or a combination thereof.
Clause 33. The method of any of clauses 30 to 32, wherein the first beam and the second beam are associated with the base station.
Clause 34. The method of any of clauses 30 to 33, wherein the first beam is associated with the base station and the second beam is associated with another base station.
Clause 35. The method of any of clauses 30 to 34, wherein the second beam is associated with the base station and the first beam is associated with another base station.
Clause 36. The method of any of clauses 30 to 35, wherein the first beam is a reference beam associated with a known beam shape.
Clause 37. The method of any of clauses 30 to 36, wherein the transformation information comprises an Azimuth degree offset, an elevation degree offset, or a combination thereof.
Clause 38. The method of any of clauses 30 to 37, further comprising: transmitting, to the base station, a template for beam shapes, wherein the transformation information is based in part upon the template.
Clause 39. A base station, comprising: a memory; at least one transceiver; and at least one processor communicatively coupled to the memory and the at least one transceiver, the at least one processor configured to: determine an antenna configuration associated with the base station; determine a table that maps each antenna element of a set of antenna elements associated with the antenna configuration to a phase shift, or an amplitude shift, or a combination thereof; report an indication of the table to a position estimation entity; and report an indication of the antenna configuration to the position estimation entity.
Clause 40. The base station of clause 39, wherein the table maps the set of antenna elements per antenna element, or wherein the table maps the set of antenna elements per group of antenna elements that are associated with a same phase shift, or a same amplitude shift, or a combination thereof.
Clause 41. The base station of any of clauses 39 to 40, wherein the antenna configuration includes a number of antenna elements among the set of antenna elements, an antenna spacing associated with the set of antenna elements, or a combination thereof.
Clause 42. The base station of clause 41, wherein the number of antenna elements comprises a number of vertical antenna elements, a number of horizontal antenna elements, or a combination thereof.
Clause 43. The base station of any of clauses 41 to 42, wherein the antenna spacing comprises vertical antenna spacing, horizontal antenna spacing, or a combination thereof.
Clause 44. The base station of any of clauses 39 to 43, wherein the table maps each antenna element of the set of antenna elements to at least the phase shift.
Clause 45. The base station of clause 44, wherein the table maps at least one antenna element of the set of antenna elements to both the phase shift and the amplitude shift.
Clause 46. The base station of any of clauses 39 to 45, wherein the indication of the table further specifies, for at least one antenna element, an association with one or more positioning reference signal (PRS) resources.
Clause 47. The base station of any of clauses 39 to 46, wherein the indication of the table and the indication of the antenna configuration are reported via a single measurement report, or wherein the indication of the table and the indication of the antenna configuration are reported via multiple measurement reports.
Clause 48. The base station of any of clauses 39 to 47, wherein the indication of the table is reported via location assistance data, or wherein the indication of the table is reported on-demand.
Clause 49. A position estimation entity, comprising: a memory; at least one transceiver; and at least one processor communicatively coupled to the memory and the at least one transceiver, the at least one processor configured to: receive, via the at least one transceiver, from a base station, an indication of an antenna configuration associated with the base station; receive, via the at least one transceiver, from the base station, an indication of a table that maps each antenna element of a set of antenna elements associated with the antenna configuration to a phase shift, or an amplitude shift, or a combination thereof; and determine beam shape information one or more antenna elements based on the indication of the antenna configuration and the indication of the table.
Clause 50. The position estimation entity of clause 49, wherein the indication of the table is received via location assistance data, or wherein the indication of the table is received on-demand.
Clause 51. The position estimation entity of any of clauses 49 to 50, wherein the table maps the set of antenna elements per antenna element, or wherein the table maps the set of antenna elements per group of antenna elements that are associated with a same phase shift, or a same amplitude shift, or a combination thereof.
Clause 52. The position estimation entity of any of clauses 49 to 51, wherein the antenna configuration includes a number of antenna elements among the set of antenna elements, an antenna spacing associated with the set of antenna elements, or a combination thereof.
Clause 53. The position estimation entity of clause 52, wherein the number of antenna elements comprises a number of vertical antenna elements, a number of horizontal antenna elements, or a combination thereof.
Clause 54. The position estimation entity of any of clauses 52 to 53, wherein the antenna spacing comprises vertical antenna spacing, horizontal antenna spacing, or a combination thereof.
Clause 55. The position estimation entity of any of clauses 49 to 54, wherein the table maps each antenna element of the set of antenna elements to at least the phase shift.
Clause 56. The position estimation entity of clause 55, wherein the table maps at least one antenna element of the set of antenna elements to both the phase shift and the amplitude shift.
Clause 57. The position estimation entity of any of clauses 49 to 56, wherein the indication of the table further specifies, for at least one antenna element, an association with one or more positioning reference signal (PRS) resources.
Clause 58. The position estimation entity of any of clauses 49 to 57, wherein the indication of the table and the indication of the antenna configuration are reported via a single measurement report, or wherein the indication of the table and the indication of the antenna configuration are reported via multiple measurement reports.
Clause 59. A base station, comprising: a memory; at least one transceiver; and at least one processor communicatively coupled to the memory and the at least one transceiver, the at least one processor configured to: determine a first beam shape of a first beam; determine a second beam shape of a second beam; determine transformation information by which the first beam shape of the first beam is transformed into the second beam shape of the second beam; and report the transformation information to a position estimation entity.
Clause 60. The base station of clause 59, wherein the transformation information comprises rotation information, translation information, or a combination thereof.
Clause 61. The base station of any of clauses 59 to 60, wherein the first beam and the second beam are associated with the base station.
Clause 62. The base station of any of clauses 59 to 61, wherein the first beam is associated with the base station and the second beam is associated with another base station.
Clause 63. The base station of any of clauses 59 to 62, wherein the second beam is associated with the base station and the first beam is associated with another base station.
Clause 64. The base station of any of clauses 59 to 63, wherein the first beam is a reference beam associated with a known beam shape.
Clause 65. The base station of any of clauses 59 to 64, wherein the transformation information comprises an Azimuth degree offset, an elevation degree offset, or a combination thereof.
Clause 66. The base station of any of clauses 59 to 65, wherein the at least one processor is further configured to: receive, via the at least one transceiver, from the position estimation entity, a template for beam shapes, wherein the transformation information is based in part upon the template.
Clause 67. The base station of any of clauses 59 to 66, wherein the transformation information is reported via location assistance data, or wherein the transformation information is reported on-demand.
Clause 68. A position estimation entity, comprising: a memory; at least one transceiver; and at least one processor communicatively coupled to the memory and the at least one transceiver, the at least one processor configured to: receive, via the at least one transceiver, from a base station, transformation information by which a first beam shape of a first beam is transformed into a second beam shape of a second beam; and determine the second beam shape of the second beam based in part upon the transformation information.
Clause 69. The position estimation entity of clause 68, wherein the transformation information is received via location assistance data, or wherein the transformation information is received on-demand.
Clause 70. The position estimation entity of any of clauses 68 to 69, wherein the transformation information comprises rotation information, translation information, or a combination thereof.
Clause 71. The position estimation entity of any of clauses 68 to 70, wherein the first beam and the second beam are associated with the base station.
Clause 72. The position estimation entity of any of clauses 68 to 71, wherein the first beam is associated with the base station and the second beam is associated with another base station.
Clause 73. The position estimation entity of any of clauses 68 to 72, wherein the second beam is associated with the base station and the first beam is associated with another base station.
Clause 74. The position estimation entity of any of clauses 68 to 73, wherein the first beam is a reference beam associated with a known beam shape.
Clause 75. The position estimation entity of any of clauses 68 to 74, wherein the transformation information comprises an Azimuth degree offset, an elevation degree offset, or a combination thereof.
Clause 76. The position estimation entity of any of clauses 68 to 75, wherein the at least one processor is further configured to: transmit, via the at least one transceiver, to the base station, a template for beam shapes, wherein the transformation information is based in part upon the template.
Clause 77. A base station, comprising: means for determining an antenna configuration associated with the base station; means for determining a table that maps each antenna element of a set of antenna elements associated with the antenna configuration to a phase shift, or an amplitude shift, or a combination thereof; means for reporting an indication of the table to a position estimation entity; and means for reporting an indication of the antenna configuration to the position estimation entity.
Clause 78. The base station of clause 77, wherein the table maps the set of antenna elements per antenna element, or wherein the table maps the set of antenna elements per group of antenna elements that are associated with a same phase shift, or a same amplitude shift, or a combination thereof.
Clause 79. The base station of any of clauses 77 to 78, wherein the antenna configuration includes a number of antenna elements among the set of antenna elements, an antenna spacing associated with the set of antenna elements, or a combination thereof.
Clause 80. The base station of clause 79, wherein the number of antenna elements comprises a number of vertical antenna elements, a number of horizontal antenna elements, or a combination thereof.
Clause 81. The base station of any of clauses 79 to 80, wherein the antenna spacing comprises vertical antenna spacing, horizontal antenna spacing, or a combination thereof.
Clause 82. The base station of any of clauses 77 to 81, wherein the table maps each antenna element of the set of antenna elements to at least the phase shift.
Clause 83. The base station of clause 82, wherein the table maps at least one antenna element of the set of antenna elements to both the phase shift and the amplitude shift.
Clause 84. The base station of any of clauses 77 to 83, wherein the indication of the table further specifies, for at least one antenna element, an association with one or more positioning reference signal (PRS) resources.
Clause 85. The base station of any of clauses 77 to 84, wherein the indication of the table and the indication of the antenna configuration are reported via a single measurement report, or wherein the indication of the table and the indication of the antenna configuration are reported via multiple measurement reports.
Clause 86. The base station of any of clauses 77 to 85, wherein the indication of the table is reported via location assistance data, or wherein the indication of the table is reported on-demand.
Clause 87. A position estimation entity, comprising: means for receiving, from a base station, an indication of an antenna configuration associated with the base station; means for receiving, from the base station, an indication of a table that maps each antenna element of a set of antenna elements associated with the antenna configuration to a phase shift, or an amplitude shift, or a combination thereof; and means for determining beam shape information one or more antenna elements based on the indication of the antenna configuration and the indication of the table.
Clause 88. The position estimation entity of clause 87, wherein the indication of the table is received via location assistance data, or wherein the indication of the table is received on-demand.
Clause 89. The position estimation entity of any of clauses 87 to 88, wherein the table maps the set of antenna elements per antenna element, or wherein the table maps the set of antenna elements per group of antenna elements that are associated with a same phase shift, or a same amplitude shift, or a combination thereof.
Clause 90. The position estimation entity of any of clauses 87 to 89, wherein the antenna configuration includes a number of antenna elements among the set of antenna elements, an antenna spacing associated with the set of antenna elements, or a combination thereof.
Clause 91. The position estimation entity of clause 90, wherein the number of antenna elements comprises a number of vertical antenna elements, a number of horizontal antenna elements, or a combination thereof.
Clause 92. The position estimation entity of any of clauses 90 to 91, wherein the antenna spacing comprises vertical antenna spacing, horizontal antenna spacing, or a combination thereof.
Clause 93. The position estimation entity of any of clauses 87 to 92, wherein the table maps each antenna element of the set of antenna elements to at least the phase shift.
Clause 94. The position estimation entity of clause 93, wherein the table maps at least one antenna element of the set of antenna elements to both the phase shift and the amplitude shift.
Clause 95. The position estimation entity of any of clauses 87 to 94, wherein the indication of the table further specifies, for at least one antenna element, an association with one or more positioning reference signal (PRS) resources.
Clause 96. The position estimation entity of any of clauses 87 to 95, wherein the indication of the table and the indication of the antenna configuration are reported via a single measurement report, or wherein the indication of the table and the indication of the antenna configuration are reported via multiple measurement reports.
Clause 97. A base station, comprising: means for determining a first beam shape of a first beam; means for determining a second beam shape of a second beam; means for determining transformation information by which the first beam shape of the first beam is transformed into the second beam shape of the second beam; and means for reporting the transformation information to a position estimation entity.
Clause 98. The base station of clause 97, wherein the transformation information comprises rotation information, translation information, or a combination thereof.
Clause 99. The base station of any of clauses 97 to 98, wherein the first beam and the second beam are associated with the base station.
Clause 100. The base station of any of clauses 97 to 99, wherein the first beam is associated with the base station and the second beam is associated with another base station.
Clause 101. The base station of any of clauses 97 to 100, wherein the second beam is associated with the base station and the first beam is associated with another base station.
Clause 102. The base station of any of clauses 97 to 101, wherein the first beam is a reference beam associated with a known beam shape.
Clause 103. The base station of any of clauses 97 to 102, wherein the transformation information comprises an Azimuth degree offset, an elevation degree offset, or a combination thereof.
Clause 104. The base station of any of clauses 97 to 103, further comprising: means for receiving, from the position estimation entity, a template for beam shapes, wherein the transformation information is based in part upon the template.
Clause 105. The base station of any of clauses 97 to 104, wherein the transformation information is reported via location assistance data, or wherein the transformation information is reported on-demand.
Clause 106. A position estimation entity, comprising: means for receiving, from a base station, transformation information by which a first beam shape of a first beam is transformed into a second beam shape of a second beam; and means for determining the second beam shape of the second beam based in part upon the transformation information.
Clause 107. The position estimation entity of clause 106, wherein the transformation information is received via location assistance data, or wherein the transformation information is received on-demand.
Clause 108. The position estimation entity of any of clauses 106 to 107, wherein the transformation information comprises rotation information, translation information, or a combination thereof.
Clause 109. The position estimation entity of any of clauses 106 to 108, wherein the first beam and the second beam are associated with the base station.
Clause 110. The position estimation entity of any of clauses 106 to 109, wherein the first beam is associated with the base station and the second beam is associated with another base station.
Clause 111. The position estimation entity of any of clauses 106 to 110, wherein the second beam is associated with the base station and the first beam is associated with another base station.
Clause 112. The position estimation entity of any of clauses 106 to 111, wherein the first beam is a reference beam associated with a known beam shape.
Clause 113. The position estimation entity of any of clauses 106 to 112, wherein the transformation information comprises an Azimuth degree offset, an elevation degree offset, or a combination thereof.
Clause 114. The position estimation entity of any of clauses 106 to 113, further comprising: means for transmitting, to the base station, a template for beam shapes, wherein the transformation information is based in part upon the template.
Clause 115. A non-transitory computer-readable medium storing computer-executable instructions that, when executed by a base station, cause the base station to: determine an antenna configuration associated with the base station; determine a table that maps each antenna element of a set of antenna elements associated with the antenna configuration to a phase shift, or an amplitude shift, or a combination thereof; report an indication of the table to a position estimation entity; and report an indication of the antenna configuration to the position estimation entity.
Clause 116. The non-transitory computer-readable medium of clause 115, wherein the table maps the set of antenna elements per antenna element, or wherein the table maps the set of antenna elements per group of antenna elements that are associated with a same phase shift, or a same amplitude shift, or a combination thereof.
Clause 117. The non-transitory computer-readable medium of any of clauses 115 to 116, wherein the antenna configuration includes a number of antenna elements among the set of antenna elements, an antenna spacing associated with the set of antenna elements, or a combination thereof.
Clause 118. The non-transitory computer-readable medium of clause 117, wherein the number of antenna elements comprises a number of vertical antenna elements, a number of horizontal antenna elements, or a combination thereof.
Clause 119. The non-transitory computer-readable medium of any of clauses 117 to 118, wherein the antenna spacing comprises vertical antenna spacing, horizontal antenna spacing, or a combination thereof.
Clause 120. The non-transitory computer-readable medium of any of clauses 115 to 119, wherein the table maps each antenna element of the set of antenna elements to at least the phase shift.
Clause 121. The non-transitory computer-readable medium of clause 120, wherein the table maps at least one antenna element of the set of antenna elements to both the phase shift and the amplitude shift.
Clause 122. The non-transitory computer-readable medium of any of clauses 115 to 121, wherein the indication of the table further specifies, for at least one antenna element, an association with one or more positioning reference signal (PRS) resources.
Clause 123. The non-transitory computer-readable medium of any of clauses 115 to 122, wherein the indication of the table and the indication of the antenna configuration are reported via a single measurement report, or wherein the indication of the table and the indication of the antenna configuration are reported via multiple measurement reports.
Clause 124. The non-transitory computer-readable medium of any of clauses 115 to 123, wherein the indication of the table is reported via location assistance data, or wherein the indication of the table is reported on-demand.
Clause 125. A non-transitory computer-readable medium storing computer-executable instructions that, when executed by a position estimation entity, cause the position estimation entity to: receive, from a base station, an indication of an antenna configuration associated with the base station; receive, from the base station, an indication of a table that maps each antenna element of a set of antenna elements associated with the antenna configuration to a phase shift, or an amplitude shift, or a combination thereof; and determine beam shape information one or more antenna elements based on the indication of the antenna configuration and the indication of the table.
Clause 126. The non-transitory computer-readable medium of clause 125, wherein the indication of the table is received via location assistance data, or wherein the indication of the table is received on-demand.
Clause 127. The non-transitory computer-readable medium of any of clauses 125 to 126, wherein the table maps the set of antenna elements per antenna element, or wherein the table maps the set of antenna elements per group of antenna elements that are associated with a same phase shift, or a same amplitude shift, or a combination thereof.
Clause 128. The non-transitory computer-readable medium of any of clauses 125 to 127, wherein the antenna configuration includes a number of antenna elements among the set of antenna elements, an antenna spacing associated with the set of antenna elements, or a combination thereof.
Clause 129. The non-transitory computer-readable medium of clause 128, wherein the number of antenna elements comprises a number of vertical antenna elements, a number of horizontal antenna elements, or a combination thereof.
Clause 130. The non-transitory computer-readable medium of any of clauses 128 to 129, wherein the antenna spacing comprises vertical antenna spacing, horizontal antenna spacing, or a combination thereof.
Clause 131. The non-transitory computer-readable medium of any of clauses 125 to 130, wherein the table maps each antenna element of the set of antenna elements to at least the phase shift.
Clause 132. The non-transitory computer-readable medium of clause 131, wherein the table maps at least one antenna element of the set of antenna elements to both the phase shift and the amplitude shift.
Clause 133. The non-transitory computer-readable medium of any of clauses 125 to 132, wherein the indication of the table further specifies, for at least one antenna element, an association with one or more positioning reference signal (PRS) resources.
Clause 134. The non-transitory computer-readable medium of any of clauses 125 to 133, wherein the indication of the table and the indication of the antenna configuration are reported via a single measurement report, or wherein the indication of the table and the indication of the antenna configuration are reported via multiple measurement reports.
Clause 135. A non-transitory computer-readable medium storing computer-executable instructions that, when executed by a base station, cause the base station to: determine a first beam shape of a first beam; determine a second beam shape of a second beam; determine transformation information by which the first beam shape of the first beam is transformed into the second beam shape of the second beam; and report the transformation information to a position estimation entity.
Clause 136. The non-transitory computer-readable medium of clause 135, wherein the transformation information comprises rotation information, translation information, or a combination thereof.
Clause 137. The non-transitory computer-readable medium of any of clauses 135 to 136, wherein the first beam and the second beam are associated with the base station.
Clause 138. The non-transitory computer-readable medium of any of clauses 135 to 137, wherein the first beam is associated with the base station and the second beam is associated with another base station.
Clause 139. The non-transitory computer-readable medium of any of clauses 135 to 138, wherein the second beam is associated with the base station and the first beam is associated with another base station.
Clause 140. The non-transitory computer-readable medium of any of clauses 135 to 139, wherein the first beam is a reference beam associated with a known beam shape.
Clause 141. The non-transitory computer-readable medium of any of clauses 135 to 140, wherein the transformation information comprises an Azimuth degree offset, an elevation degree offset, or a combination thereof.
Clause 142. The non-transitory computer-readable medium of any of clauses 135 to 141, further comprising instructions that, when executed by base station, further cause the base station to: receive, from the position estimation entity, a template for beam shapes, wherein the transformation information is based in part upon the template.
Clause 143. The non-transitory computer-readable medium of any of clauses 135 to 142, wherein the transformation information is reported via location assistance data, or wherein the transformation information is reported on-demand.
Clause 144. A non-transitory computer-readable medium storing computer-executable instructions that, when executed by a position estimation entity, cause the position estimation entity to: receive, from a base station, transformation information by which a first beam shape of a first beam is transformed into a second beam shape of a second beam; and determine the second beam shape of the second beam based in part upon the transformation information.
Clause 145. The non-transitory computer-readable medium of clause 144, wherein the transformation information is received via location assistance data, or wherein the transformation information is received on-demand.
Clause 146. The non-transitory computer-readable medium of any of clauses 144 to 145, wherein the transformation information comprises rotation information, translation information, or a combination thereof.
Clause 147. The non-transitory computer-readable medium of any of clauses 144 to 146, wherein the first beam and the second beam are associated with the base station.
Clause 148. The non-transitory computer-readable medium of any of clauses 144 to 147, wherein the first beam is associated with the base station and the second beam is associated with another base station.
Clause 149. The non-transitory computer-readable medium of any of clauses 144 to 148, wherein the second beam is associated with the base station and the first beam is associated with another base station.
Clause 150. The non-transitory computer-readable medium of any of clauses 144 to 149, wherein the first beam is a reference beam associated with a known beam shape.
Clause 151. The non-transitory computer-readable medium of any of clauses 144 to 150, wherein the transformation information comprises an Azimuth degree offset, an elevation degree offset, or a combination thereof.
Clause 152. The non-transitory computer-readable medium of any of clauses 144 to 151, further comprising instructions that, when executed by position estimation entity, further cause the position estimation entity to: transmit, to the base station, a template for beam shapes, wherein the transformation information is based in part upon the template.

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those of skill in the art will appreciate that the various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the aspects disclosed herein may be implemented or performed with a general purpose processor, a digital signal processor (DSP), an ASIC, a field-programable gate array (FPGA), or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, for example, a combination of a DSP and a microprocessor, a plurality of microprocessors, one or more microprocessors in conjunction with a DSP core, or any other such configuration.

The methods, sequences and/or algorithms described in connection with the aspects disclosed herein may be embodied directly in hardware, in a software module executed by a processor, or in a combination of the two. A software module may reside in random access memory (RAM), flash memory, read-only memory (ROM), erasable programmable ROM (EPROM), electrically erasable programmable ROM (EEPROM), registers, hard disk, a removable disk, a CD-ROM, or any other form of storage medium known in the art. An example storage medium is coupled to the processor such that the processor can read information from, and write information to, the storage medium. In the alternative, the storage medium may be integral to the processor. The processor and the storage medium may reside in an ASIC. The ASIC may reside in a user terminal (e.g., UE). In the alternative, the processor and the storage medium may reside as discrete components in a user terminal.

In one or more example aspects, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media.

While the foregoing disclosure shows illustrative aspects of the disclosure, it should be noted that various changes and modifications could be made herein without departing from the scope of the disclosure as defined by the appended claims. The functions, steps and/or actions of the method claims in accordance with the aspects of the disclosure described herein need not be performed in any particular order. Furthermore, although elements of the disclosure may be described or claimed in the singular, the plural is contemplated unless limitation to the singular is explicitly stated.

## Claims

1. A method of operating a base station, the method comprising:
determining an antenna configuration associated with the base station;
determining a table that maps each antenna element of a set of antenna elements associated with the antenna configuration to a phase shift, or an amplitude shift, or a combination thereof;
reporting an indication of the table to a position estimation entity; and
reporting an indication of the antenna configuration to the position estimation entity.

2. The method of claim 1,
wherein the table maps the set of antenna elements per antenna element.

3. The method of claim 1,
wherein the table maps the set of antenna elements per group of antenna elements that are associated with a same phase shift or a same amplitude shift.

4. The method of claim 1, wherein the table maps some of the set of antenna elements per antenna element and others per group of antenna elements that are associated with a same phase shift or a same amplitude shift.

5. The method of any preceding claim, wherein the antenna configuration includes a number of vertical antenna elements among the set of antenna elements and a vertical antenna spacing associated with the set of antenna elements.

6. The method of any preceding claim, wherein the antenna configuration includes a number of horizontal antenna elements among the set of antenna elements and a horizontal antenna spacing associated with the set of antenna elements.

7. The method of any preceding claim, wherein the table maps each antenna element of the set of antenna elements to at least the phase shift for that antenna element, wherein the table maps at least one antenna element of the set of antenna elements to both the phase shift and the amplitude shift for that antenna element.

8. The method of any preceding claim, wherein the indication of the table further specifies, for at least one antenna element, an association with one or more positioning reference signal resources for that antenna element.

9. The method of any preceding claim,
wherein the indication of the table and the indication of the antenna configuration are reported via a single measurement report.

10. The method of any of claims 1 to 8,
wherein the indication of the table and the indication of the antenna configuration are reported via multiple measurement reports.

11. The method of any preceding claim,
wherein the indication of the table is reported via location assistance data.

12. The method of any of claims 1 to 10,
wherein the indication of the table is reported on-demand.

13. A method of operating a position estimation entity, the method comprising:
receiving, from a base station, an indication of an antenna configuration associated with the base station;
receiving, from the base station, an indication of a table that maps each antenna element of a set of antenna elements associated with the antenna configuration to a phase shift, or an amplitude shift, or a combination thereof; and
determining beam shape information one or more antenna elements based on the indication of the antenna configuration and the indication of the table.

14. A base station, comprising:
means for determining an antenna configuration associated with the base station;
means for determining a table that maps each antenna element of a set of antenna elements associated with the antenna configuration to a phase shift, or an amplitude shift, or a combination thereof;
means for reporting an indication of the table to a position estimation entity; and
means for reporting an indication of the antenna configuration to the position estimation entity.

15. A position estimation entity, comprising:
means for receiving, from a base station, an indication of an antenna configuration associated with the base station;
means for receiving, from the base station, an indication of a table that maps each antenna element of a set of antenna elements associated with the antenna configuration to a phase shift, or an amplitude shift, or a combination thereof; and
means for determining beam shape information one or more antenna elements based on the indication of the antenna configuration and the indication of the table.
